# EUROPÄISCHE PATENTSCHRIFT

(11) **EP 2 080 262 B1**
(45) Veröffentlichungstag und Bekanntmachung des Hinweises auf die Patenterteilung: **17.03.2010**
(21) Anmeldenummer: 07821126.5
(22) Anmeldetag: 10.10.2007
(51) Int. Cl.: H02M 7/49

(54) **UMRICHTERSCHALTUNG ZUR SCHALTUNG EINER VIELZAHL VON SCHALTSPANNUNGSNIVEAUS**
CONVERTER CIRCUIT FOR SWITCHING A LARGE NUMBER OF SWITCHING VOLTAGE LEVELS
CIRCUIT DE CONVERSION POUR CONNECTER UNE PLURALITÉ DE NIVEAUX DE TENSIONS DE COMMUTATION

(30) Priorität: 18.10.2006 EP 06405441
(43) Veröffentlichungstag der Anmeldung: 22.07.2009
(73) Patentinhaber: ABB Research LTD, 8050 Zürich (CH)
(72) Erfinder: BARBOSA, Peter, Taoyuan County: 32063 Taiwan (TW); STEIMER, Peter, 5420 Ehrendingen (CH); CHAUDHURI, Toufann, 1260 Nyon (CH)
(74) Vertreter: ABB Patent Attorneys
(86) Internationale Anmeldenummer: PCT/EP2007/060758
(87) Internationale Veröffentlichungsnummer: WO 2008/046772

(56) Entgegenhaltungen:
- WO-A-2006/053448
- DE-A1- 2 740 702

## Beschreibung

### Technisches Gebiet

Die Erfindung bezieht sich auf das Gebiet der Leistungselektronik. Sie geht aus von einer Umrichterschaltung zur Schaltung einer Vielzahl von Schaltspannungsniveaus gemäss dem Oberbegriff der unabhängigen Ansprüche.

### Stand der Technik

Umrichterschaltungen werden heute in einer Fülle von leistungselektronischen Anwendungen eingesetzt. Die Anforderungen an eine solche Umrichterschaltung sind dabei zum einen, möglichst wenig Oberschwingungen an Phasen eines an die Umrichterschaltung gängigerweise angeschlossenen elektrischen Wechselspannungsnetzes zu erzeugen und zum anderen mit einer möglichst geringen Anzahl an elektronischen Bauelementen möglichst grosse Leistungen zu übertragen. Eine geeignete Umrichterschaltung zur Schaltung einer Vielzahl von Schaltspannungsniveaus ist in der DE 692 05 413 T2 angegeben. Darin ist eine erste Schaltgruppe und n weitere erste Schaltgruppen für jede Phase vorgesehen, wobei n ≥ 1 ist und die erste Schaltgruppe durch einen ersten ansteuerbaren bidirektionalen Leistungshalbleiterschalter und einen zweiten ansteuerbaren bidirektionalen Leistungshalbleiterschalter gebildet ist und die n weiteren ersten Schaltgruppen jeweils durch einen ersten ansteuerbaren bidirektionalen Leistungshalbleiterschalter und einen zweiten ansteuerbaren bidirektionalen Leistungshalbleiterschalter und durch einen mit dem ersten und zweiten ansteuerbaren bidirektionalen Leistungshalbleiterschalter verbundenen Kondensator gebildet sind. Jede der ersten Schaltgruppen ist verkettet mit der jeweils benachbarten ersten Schaltgruppe verbunden, wobei der erste und der zweite ansteuerbare bidirektionale Leistungshalbleiterschalter der ersten weiteren ersten Schaltgruppe miteinander verbunden sind. Der erste und der zweite ansteuerbare bidirektionale Leistungshalbleiterschalter ist jeweils durch einen Bipolartransistor mit isoliert angeordneter Ansteuerelektrode (IGBT - Insulated Gate Bipolartransistor) und durch eine dem Bipolartransistor antiparallel geschaltete Diode gebildet.

Eine weitere gattungsgemässe Umrichterschaltung zur Schaltung einer Vielzahl von Schaltspannungsniveaus ist in der WO 2006/053448 A1 angegeben.

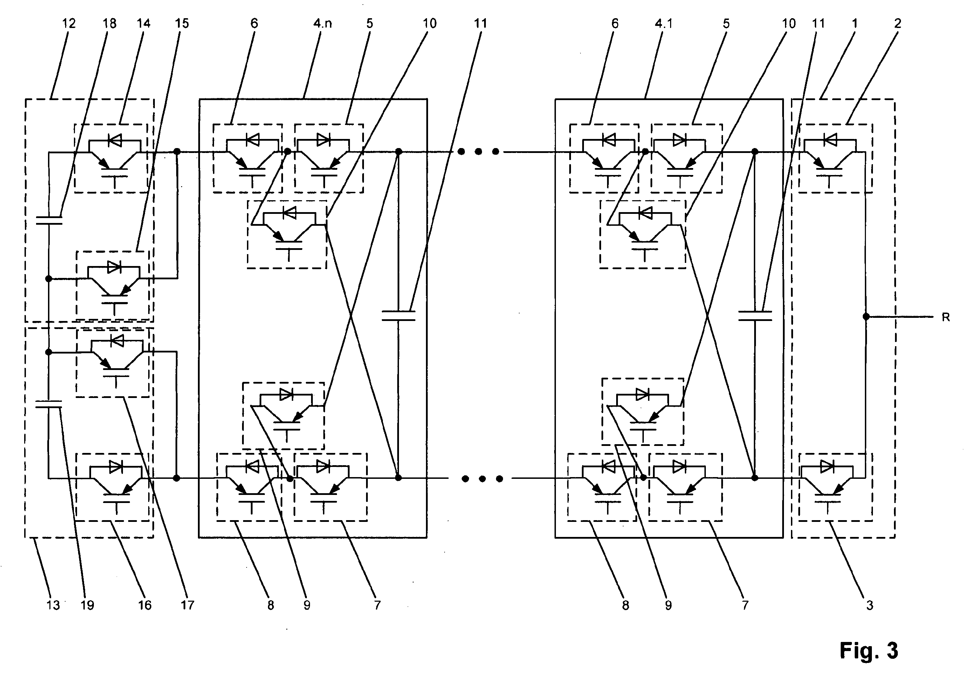

Fig.3 offenbart dort eine Umrichterschaltung zur Schaltung einer Vielzahl von Schaltspannungsniveaus, mit einer für jede Phase vorgesehenen ersten Schaltgruppe, wobei die erste Schaltgruppe durch einen ersten ansteuerbaren bidirektionalen Leistungshalbleiterschalter und einen zweiten ansteuerbaren bidirektionalen Leistungshalbleiterschalter gebildet ist und der erste und der zweite ansteuerbare bidirektionale Leistungshalbleiterschalter der ersten Schaltgruppe miteinander verbunden sind,
wobei n zweite Schaltgruppen vorgesehen sind, welche jeweils einen ersten, zweiten, dritten, vierten, fünften und sechsten ansteuerbaren bidirektionalen Leistungshalbleiterschalter und einen Kondensator aufweisen, wobei n ≥ 1 ist und der erste ansteuerbare bidirektionale Leistungshalbleiterschalter antiseriell zu dem zweiten ansteuerbaren bidirektionalen Leistungshalbleiterschalter geschaltet ist, der dritte ansteuerbare bidirektionale Leistungshalbleiterschalter antiseriell zu dem vierten ansteuerbaren bidirektionalen Leistungshalbleiterschalter geschaltet ist, der erste ansteuerbare bidirektionale Leistungshalbleiterschalter mit dem Kondensator verbunden ist, der dritte ansteuerbare bidirektionale Leistungshalbleiterschalter mit dem Kondensator verbunden ist,
wobei die erste Schaltgruppe mit der ersten zweiten Schaltgruppe verbunden ist,
wobei eine dritte Schaltgruppe und eine vierte Schaltgruppe vorgesehen ist, welche jeweils einen ersten ansteuerbaren bidirektionalen Leistungshalbleiterschalter, einen zweiten ansteuerbaren bidirektionalen Leistungshalbleiterschalter und einen mit dem ersten und zweiten ansteuerbaren bidirektionalen Leistungshalbleiterschalter verbundenen Kondensator aufweisen, wobei der erste und zweite ansteuerbare bidirektionale Leistungshalbleiterschalter miteinander verbunden sind,
wobei die dritte Schaltgruppe mit der n-ten zweiten Schaltgruppe verbunden ist,
wobei die vierte Schaltgruppe mit der n-ten zweiten Schaltgruppe verbunden ist, und
wobei die dritte Schaltgruppe mit der vierten Schaltgruppe verbunden ist.

Problematisch bei einer Umrichterschaltung zur Schaltung einer Vielzahl von Schaltspannungsniveaus nach der DE 692 05 413 T2 ist, dass die in der Umrichterschaltung während des Betriebs gespeicherte elektrische Energie sehr hoch ist. Da die elektrische Energie in den Kondensatoren der n ersten Schaltgruppen der Umrichterschaltung gespeichert ist, müssen die Kondensatoren für diese elektrische Energie, d.h. bezüglich ihre Spannungsfestigkeit und/oder ihrer Kapazität, ausgelegt werden. Dies bedingt aber Kondensatoren mit grosser Baugrösse, die entsprechend teuer sind. Zudem benötigt die Umrichterschaltung aufgrund der bezüglich der Baugrösse grossen Kondensatoren viel Platz, so dass ein platzsparender Aufbau, wie er für viele Anwendungen, beispielsweise für Traktionsanwendungen, gefordert ist, nicht möglich ist. Weiterhin bewirkt der Einsatz der bezüglich der Baugrösse grossen Kondensatoren einen hohen Montage- und Wartungsaufwand. Darüberhinaus ist die Umrichterschaltung zur Schaltung einer Vielzahl von Schaltspannungsniveaus nach der DE 692 05 413 T2 aufgrund der ausschliesslichen Verwendung von Bipolartransistoren mit isoliert angeordneter Ansteuerelektrode als ansteuerbare Leistungshalbleiter- schalter anfällig gegen hohe Spannungen, insbesondere gegen Überspannungen, und weist zudem erhebliche Wirkleistungsverluste auf.

### Darstellung der Erfindung

Aufgabe der Erfindung ist es deshalb, eine Umrichterschaltung zur Schaltung einer Vielzahl von Schaltspannungsniveaus anzugeben, die möglichst wenig elektrische Energie während ihres Betriebes speichert, platzsparend realisiert werden kann, weitestgehend unempfindlich gegen hohe Spannungen und Fehlerzustände ist und geringe Wirkleistungsverluste aufweist. Diese Aufgabe wird durch die Merkmale des Anspruchs 1 beziehungsweise des Anspruchs 2 gelöst. In den abhängigen Ansprüchen sind vorteilhafte Weiterbildungen der Erfindung angegeben.

Die erfindungsgemässe Umrichterschaltung zur Schaltung einer Vielzahl von Schaltspannungsniveaus umfasst eine für jede Phase vorgesehene erste Schaltgruppe, wobei die erste Schaltgruppe durch einen ersten ansteuerbaren bidirektionalen Leistungshalbleiterschalter und einen zweiten ansteuerbaren bidirektionalen Leistungshalbleiterschalter gebildet ist und der erste und der zweite ansteuerbare bidirektionale Leistungshalbleiterschalter der ersten Schaltgruppe miteinander verbunden sind. Erfindungsgemäss sind nun n zweite Schaltgruppen vorgesehen, welche jeweils einen ersten, zweiten, dritten, vierten, fünften und sechsten ansteuerbaren bidirektionalen Leistungshalbleiterschalter und einen Kondensator aufweisen, wobei n ≥ 1 ist und der erste ansteuerbare bidirektionale Leistungshalbleiterschalter antiseriell zu dem zweiten ansteuerbaren bidirektionalen Leistungshalbleiterschalter geschaltet ist, der dritte ansteuerbare bidirektionale Leistungshalbleiterschalter antiseriell zu dem vierten ansteuerbaren bidirektionalen Leistungshalbleiterschalter geschaltet ist, der erste ansteuerbare bidirektionale Leistungshalbleiterschalter mit dem Kondensator verbunden ist, der dritte ansteuerbare bidirektionale Leistungshalbleiterschalter mit dem Kondensator verbunden ist, der fünfte ansteuerbare bidirektionale Leistungshalbleiterschalter unmittelbar mit dem vierten ansteuerbaren bidirektionalen Leistungshalbleiterschalter und unmittelbar mit dem Verbindungspunkt des ersten ansteuerbaren bidirektionalen Leistungshalbleiterschalter mit dem Kondensator verbunden ist und der sechste ansteuerbare bidirektionale Leistungshalbleiterschalter unmittelbar mit dem zweiten ansteuerbaren bidirektionalen Leistungshalbleiterschalter und unmittelbar mit dem Verbindungspunkt des dritten ansteuerbaren bidirektionalen Leistungshalbleiterschalter mit dem Kondensator verbunden ist. Ferner ist für n>1 jede der n zweiten Schaltgruppen verkettet mit der jeweils benachbarten zweiten Schaltgruppe und die erste Schaltgruppe ist mit der ersten zweiten Schaltgruppe verbunden. Desweiteren ist eine dritte Schaltgruppe und eine vierte Schaltgruppe vorgesehen, welche jeweils einen ersten ansteuerbaren bidirektionalen Leistungshalbleiterschalter, einen zweiten ansteuerbaren bidirektionalen Leistungshalbleiterschalter und einen mit dem ersten und zweiten ansteuerbaren bidirektionalen Leistungshalbleiterschalter verbundenen Kondensator aufweisen, wobei der erste und zweite ansteuerbare bidirektionale Leistungshalbleiterschalter miteinander verbunden sind. Die die dritte Schaltgruppe ist mit der n-ten zweiten Schaltgruppe verbunden, die vierte Schaltgruppe ist mit der n-ten zweiten Schaltgruppe verbunden und die dritte Schaltgruppe ist mit der vierten Schaltgruppe verbunden. Alternativ sind p fünfte Schaltgruppen vorgesehen, welche jeweils einen ersten und eine zweiten ansteuerbaren bidirektionalen Leistungshalbleiterschalter, wobei ρ ≥ 1 ist und für p > 1 jede der p fünften Schaltgruppen verkettet mit der jeweils benachbarten fünften Schaltgruppe ist. Die erste fünfte Schaltgruppe ist dann mit der n-ten zweiten Schaltgruppe verbunden, die dritte Schaltgruppe ist mit der p-ten fünften Schaltgruppe verbunden, die vierte Schaltgruppe ist mit der p-ten fünften Schaltgruppe verbunden und die dritte Schaltgruppe ist mit der vierten Schaltgruppe verbunden. Die p fünften Schaltgruppen ergeben vorteilhaft zusätzliche Redundanz bezüglich der ansteuerbaren bidirektionalen Leistungshalbleiterschalter der erfindungsgemässen Umrichterschaltung.

Bei identischer Anzahl an Schaltspannungsniveaus kann durch die erfindungsgemässe Umrichterschaltung mittels der vorgesehenen n zweiten Schaltgruppen sowie mittels der dritten und vierten Schaltgruppe und auch mittels der p fünften Schaltgruppen und deren vorstehend beschriebenen Verbindungen die Anzahl Kondensatoren der Umrichterschaltung im Vergleich zu Umrichterschaltungen nach dem Stand der Technik mit Vorteil reduziert werden und zudem die gespeicherte elektrische Energie der Umrichterschaltung reduziert werden. Somit kann die gespeicherte elektrische Energie der Umrichterschaltung insgesamt klein gehalten werden, wodurch die Kondensatoren der Umrichterschaltung nur für eine kleine zu speichernde elektrische Energie, d.h. bezüglich ihrer Spannungsfestigkeit und/oder ihrer Kapazität, ausgelegt werden müssen. Aufgrund der daraus resultierenden geringen Baugrösse der Kondensatoren benötigt die Umrichterschaltung sehr wenig Platz, so dass vorteilhaft ein platzsparender Aufbau, wie er für viele Anwendungen, beispielsweise für Traktionsanwendungen, gefordert ist, möglich ist. Zudem kann durch die geringe Baugrösse der Kondensatoren auch der Montage- und Wartungsaufwand vorteilhaft gering gehalten werden.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Umrichterschaltung,
- Fig. 2: eine zweite Ausführungsform einer erfindungsgemässen Umrichterschaltung,
- Fig. 3: eine dritte Ausführungsform einer erfindungsgemässen Umrichterschaltung,
- Fig. 4: eine vierte Ausführungsform einer erfindungsgemässen Umrichterschaltung,
- Fig. 5: eine fünfte Ausführungsform einer erfindungsgemässen Umrichterschaltung,
- Fig. 6: eine sechste Ausführungsform einer erfindungsgemässen Umrichterschaltung und
- Fig. 7: eine siebte Ausführungsform einer erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

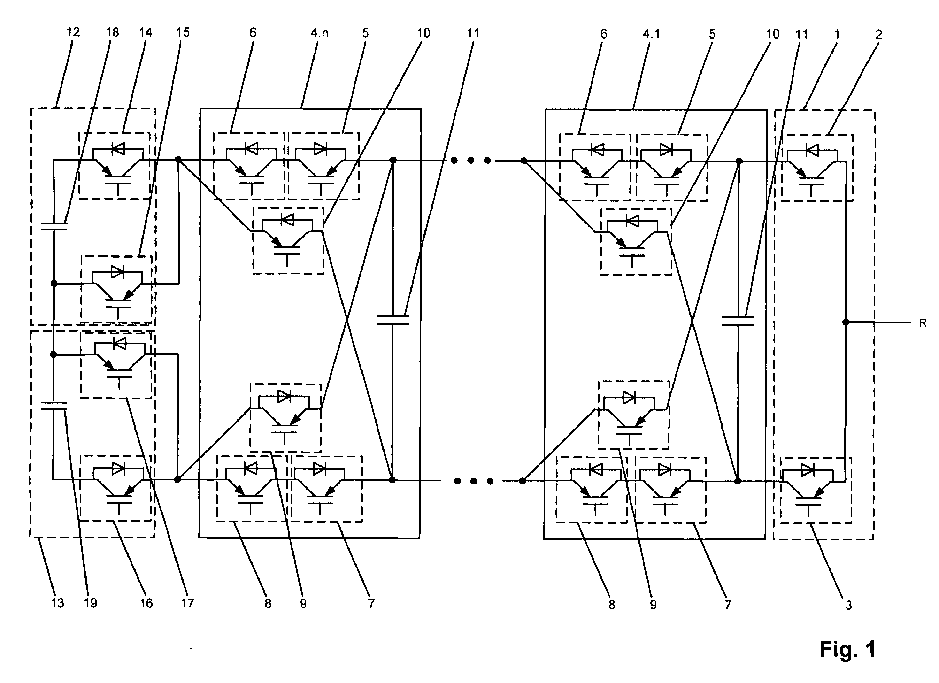

In Fig. 1 ist eine, insbesondere einphasige, erste Ausführungsform einer erfindungsgemässen Umrichterschaltung zur Schaltung einer Vielzahl von Schaltspannungsniveaus gezeigt. Darin umfasst die Umrichterschaltung eine für jede Phase R, S, T vorgesehene erste Schaltgruppe 1, wobei die erste Schaltgruppe 1 durch einen ersten ansteuerbaren bidirektionalen Leistungshalbleiterschalter 2 und einen zweiten ansteuerbaren bidirektionalen Leistungshalbleiterschalter 3 gebildet ist und der erste und der zweite ansteuerbare bidirektionale Leistungshalbleiterschalter 2, 3 der ersten Schaltgruppe 1 miteinander verbunden sind. Der Verbindungspunkt des ersten und des zweiten ansteuerbaren bidirektionalen Leistungshalbleiterschalters 2, 3 der ersten Schaltgruppe 1 bildet gemäss Fig. 1 einen Phasenanschluss, insbesondere für die Phase R.

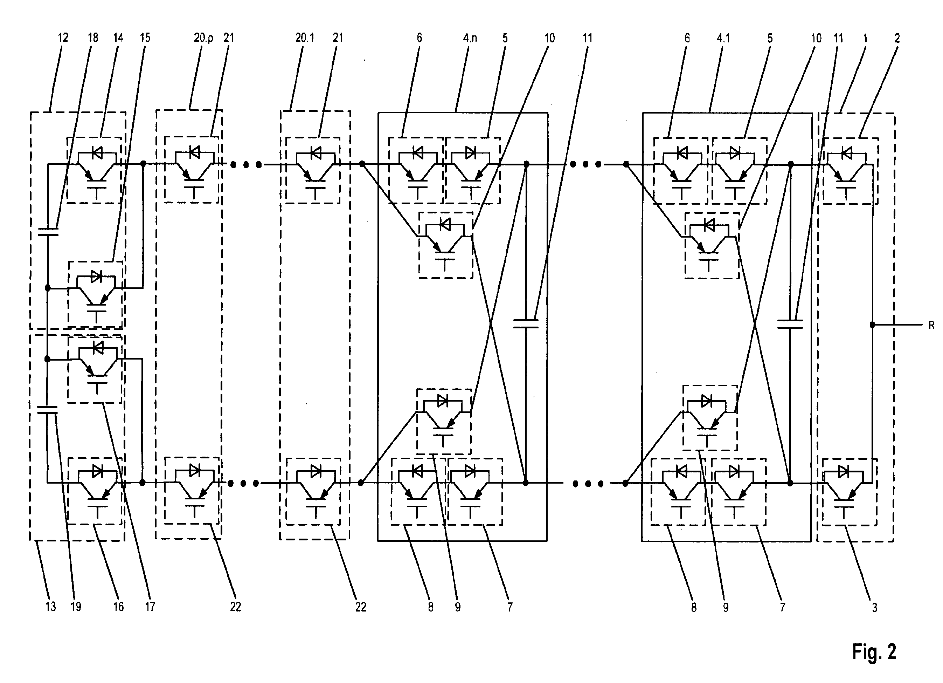

Nach der Erfindung sind nun n zweite Schaltgruppen 4.1, ...4.n vorgesehen, welche jeweils einen ersten, zweiten, dritten, vierten, fünften und sechsten ansteuerbaren bidirektionalen Leistungshalbleiterschalter 5, 6, 7, 8, 9, 10 und einen Kondensator 11 aufweisen, wobei n ≥ 1 ist und der erste ansteuerbare bidirektionale Leistungshalbleiterschalter 5 antiseriell zu dem zweiten ansteuerbaren bidirektionalen Leistungshalbleiterschalter 6 geschaltet ist, der dritte ansteuerbare bidirektionale Leistungshalbleiterschalter 7 antiseriell zu dem vierten ansteuerbaren bidirektionalen Leistungshalbleiterschalter 8 geschaltet ist, der erste ansteuerbare bidirektionale Leistungshalbleiterschalter 5 mit dem Kondensator 11 verbunden ist, der dritte ansteuerbare bidirektionale Leistungshalbleiterschalter 7 mit dem Kondensator 11 verbunden ist, der fünfte ansteuerbare bidirektionale Leistungshalbleiterschalter 9 unmittelbar mit dem vierten ansteuerbaren bidirektionalen Leistungshalbleiterschalter 8 und unmittelbar mit dem Verbindungspunkt des ersten ansteuerbaren bidirektionalen Leistungshalbleiterschalter 5 mit dem Kondensator 11 verbunden ist und der sechste ansteuerbare bidirektionale Leistungshalbleiterschalter 10 unmittelbar mit dem zweiten ansteuerbaren bidirektionalen Leistungshalbleiterschalter 6 und unmittelbar mit dem Verbindungspunkt des dritten ansteuerbaren bidirektionalen Leistungshalbleiterschalter 7 mit dem Kondensator 11 verbunden ist. Da es sich gemäss Fig. 1 bei jeder der n zweiten Schaltgruppen 4.1, ...4.n um einen Vierpol handelt, ist für n>1 jede der n zweiten Schaltgruppen 4.1, ...4.n verkettet mit der jeweils benachbarten zweiten Schaltgruppe 4.1, ...4.n. Weiterhin ist gemäss Fig. 1 die erste Schaltgruppe 1 mit der ersten zweiten Schaltgruppe 4.1 verbunden und eine dritte Schaltgruppe 12 und eine vierte Schaltgruppe 13 vorgesehen, welche jeweils einen ersten ansteuerbaren bidirektionalen Leistungshalbleiterschalter 14, 16, einen zweiten ansteuerbaren bidirektionalen Leistungshalbleiterschalter 15, 17 und einen mit dem ersten und zweiten ansteuerbaren bidirektionalen Leistungshalbleiterschalter 14, 15, 16, 17 verbundenen Kondensator 18, 19 aufweisen, wobei der erste und zweite ansteuerbare bidirektionale Leistungshalbleiterschalter 14, 15,16, 17 miteinander verbunden sind. Ferner ist gemäss Fig. 1 die dritte Schaltgruppe 12 mit der n-ten zweiten Schaltgruppe 4.n verbunden, die vierte Schaltgruppe 13 mit der n-ten zweiten Schaltgruppe 4.n verbunden und die dritte Schaltgruppe 12 mit der vierten Schaltgruppe 13 verbunden. Alternativ sind bei einer zweiten Ausführungsform der erfiindungsgemässen Umrichterschaltung nach Fig. 2 p fünfte Schaltgruppen 20.1,... 20.p vorgesehen, welche jeweils einen ersten und einen zweiten ansteuerbaren bidirektionalen Leistungshalbleiterschalter 21, 22, wobei p ≥ 1 ist. Da es sich gemäss Fig. 2 bei jeder der p fünften Schaltgruppen 20.1,... 20.p um einen Vierpol handelt, ist für ρ>1 jede der p fünften Schaltgruppen 20.1,... 20.p verkettet mit der jeweils benachbarten fünften Schaltgruppe 20.1,... 20.p. Gemäss Fig. 2 ist dann die erste fünfte Schaltgruppe 20.1 mit der n-ten zweiten Schaltgruppe 4.n verbunden, die dritte Schaltgruppe 12 ist mit der p-ten fünften Schaltgruppe 20.p verbunden, die vierte Schaltgruppe 13 ist mit der p-ten fünften Schaltgruppe 20.p verbunden und die dritte Schaltgruppe 12 ist mit der vierten Schaltgruppe 13 verbunden. Die p fünften Schaltgruppen 20.1,... 20.p ergeben vorteilhaft zusätzliche Redundanz bezüglich der ansteuerbaren bidirektionalen Leistungshalbleiterschalter der erfindungsgemässen Umrichterschaltung.

Bei identischer Anzahl an Schaltspannungsniveaus kann durch die erfindungsgemässe Umrichterschaltung mittels der vorgesehenen n zweiten Schaltgruppen 4.1, ..., 4.n sowie mittels der dritten und vierten Schaltgruppe 12, 13 und auch mittels der p fünften Schaltgruppen 20.1, ..., 20.p und deren vorstehend beschriebenen Verbindungen die Anzahl Kondensatoren 11, 18, 19, 23 der Umrichterschaltung klein gehalten werden und zudem die gespeicherte elektrische Energie der Umrichterschaltung reduziert werden. Somit kann die gespeicherte elektrische Energie der Umrichterschaltung insgesamt klein gehalten werden, wodurch die Kondensatoren 11, 18, 19, 23 der Umrichterschaltung nur für eine kleine zu speichernde elektrische Energie, d.h. bezüglich ihrer Spannungsfestigkeit und/oder ihrer Kapazität, ausgelegt werden müssen. Aufgrund der daraus resultierenden geringen Baugrösse der Kondensatoren benötigt die Umrichterschaltung sehr wenig Platz, so dass vorteilhaft ein platzsparender Aufbau, wie er für viele Anwendungen, beispielsweise für Traktionsanwendungen, gefordert ist, möglich ist. Ferner kann durch die geringe Baugrösse der Kondensatoren 11, 18, 19, 23 auch der Montage- und Wartungsaufwand vorteilhaft gering gehalten werden.

Werden beispielsweise bei der ersten Ausführungsform nach Fig. 1 n=1 zweite Schaltgruppen 4.1, ...4.n gewählt, so ist eine Umrichterschaltung zur Schaltung von neun Schaltspannungsniveaus mit lediglich drei Kondensatoren erreicht. Werden beispielsweise bei der zweiten Ausführungsform nach Fig. 2 n=1 zweite Schaltgruppen 4.1, ...4.n und p=1 fünfte Schaltgruppen 20.1,... 20.p gewählt, so ist eine Umrichterschaltung zur Schaltung von neun Schaltspannungsniveaus ebenfalls mit nur drei Kondensatoren erreicht, wobei vorteilhaft zusätzliche Redundanz bezüglich der ansteuerbaren bidirektionalen Leistungshalbleiterschalter der Umrichterschaltung durch die p=1 fünfte Schaltgruppe 20.1,... 20.p vorliegt.

Gemäss Fig. 1 ist der erste ansteuerbare bidirektionale Leistungshalbleiterschalter 2 der ersten Schaltgruppe 1 mit dem Verbindungspunkt des ersten ansteuerbaren bidirektionalen Leistungshalbleiterschalters 5 mit dem Kondensator 11 der ersten zweiten Schaltgruppe 4.1 verbunden und der zweite Leistungshalbleiterschalter 3 der ersten Schaltgruppe 1 mit dem Verbindungspunkt des dritten ansteuerbaren bidirektionalen Leistungshalbleiterschalters 7 mit dem Kondensator 11 der ersten zweiten Schaltgruppe 4.1 verbunden. Der Verbindungspunkt des ersten ansteuerbaren bidirektionalen Leistungshalbleiterschalters 14 mit dem zweiten ansteuerbaren bidirektionalen Leistungshalbleiterschalter 15 der dritte Schaltgruppe 12 ist ferner mit dem Verbindungspunkt des zweiten ansteuerbaren bidirektionalen Leistungshalbleiterschalters 6 mit dem sechsten ansteuerbaren bidirektionalen Leistungshalbleiterschalter 10 der n-ten zweiten Schaltgruppe 4.n verbunden. Der Verbindungspunkt des ersten ansteuerbaren bidirektionalen Leistungshalbleiterschalters 16 mit dem zweiten ansteuerbaren bidirektionalen Leistungshalbleiterschalter 17 der vierten Schaltgruppe 13 ist weiterhin mit dem Verbindungspunkt des vierten ansteuerbaren bidirektionalen Leistungshalbleiterschalters 8 mit dem fünften ansteuerbaren bidirektionalen Leistungshalbleiterschalter 9 der n-ten zweiten Schaltgruppe 4.n verbunden. Gemäss Fig. 1 ist der Kondensator 18 der dritten Schaltgruppe 12 mit dem Kondensator 19 der vierten Schaltgruppe 13 verbunden.

Gemäss Fig. 2 ist der erste ansteuerbare bidirektionale Leistungshalbleiterschalter 2 der ersten Schaltgruppe 1 mit dem Verbindungspunkt des ersten ansteuerbaren bidirektionalen Leistungshalbleiterschalters 5 mit dem Kondensator 11 der ersten zweiten Schaltgruppe 4.1 verbunden und der zweite ansteuerbare bidirektionale Leistungshalbleiterschalter 3 der ersten Schaltgruppe 1 mit dem Verbindungspunkt des dritten ansteuerbaren bidirektionalen Leistungshalbleiterschalters 7 mit dem Kondensator 11 der ersten zweiten Schaltgruppe 4.1 verbunden, Der erste ansteuerbare bidirektionale Leistungshalbleiterschalter 21 der ersten fünften Schaltgruppe 20.1 ist ferner mit dem Verbindungspunkt des zweiten ansteuerbaren bidirektionalen Leistungshalbleiterschalters 6 mit dem sechsten ansteuerbaren bidirektionalen Leistungshalbleiterschalter 10 der n-ten zweiten Schaltgruppe 4.n verbunden und der zweite ansteuerbare bidirektionale Leisturigshalbleiterschalter 22 der ersten fünften Schaftgruppe 20.1 ist mit dem Verbindungspunkt des vierten ansteuerbaren bidirektionalen Leistungshalbleiterschalters 8 mit dem fünften ansteuerbaren bidirektionalen Leistungshalbleiterschalter 9 der n-ten zweiten Schaltgruppe 4.n verbunden. Der Verbindungspunkt des ersten ansteuerbaren bidirektionalen Leistungshalbleiterschalters 14 mit dem zweiten ansteuerbaren bidirektionalen Leistungshalbleiterschalter 15 der dritte Schaltgruppe 12 ist darüber hinaus mit dem ersten ansteuerbaren bidirektionalen Leistungshalbleiterschalter 21 der p-ten fünften Schaltgruppe 20.p verbunden und der Verbindungspunkt des ersten ansteuerbaren bidirektionalen Leistungshalbleiterschalters 16 mit dem zweiten ansteuerbaren bidirektionalen Leistungshalbleiterschalter 17 der vierten Schaltgruppe 13 ist mit dem zweiten ansteuerbaren bidirektionalen Leistungshalbleiterschalter 22 der p-ten fünften Schaltgruppe 20.p verbunden ist. Schliesslich ist gemäss Fig. 2 der Kondensator 18 der dritten Schaltgruppe 12 mit dem Kondensator 19 der vierten Schaltgruppe 13 verbunden,

In Fig. 3 ist eine dritte Ausführungsform einer erfindungsgemässen Umrichterschaltung dargestellt. Ausgehend von Fig. 1 ist in Fig. 3 der erste ansteuerbare bidirektionale Leistungshalbleiterschalter 2 der ersten Schaltgruppe 1 mit dem Verbindungspunkt des ersten ansteuerbaren bidirektionalen Leistungshalbleiterschalters 5 mit dem Kondensator 11 der ersten zweiten Schaltgruppe 4.1 verbunden und der zweite ansteuerbare bidirektionale Leistungshalbleiterschalter 3 der ersten Schaltgruppe 1 mit dem Verbindungspunkt des dritten ansteuerbaren bidirektionalen Leistungshalbleiterschalters 7 mit dem Kondensator 11 der ersten zweiten Schaltgruppe 4.1 verbunden. Die Verbindung des fünften ansteuerbaren bidirektionalen Leistungshalbleiterschalters 9 mit dem vierten ansteuerbaren bidirektionalen Leistungshalbleiterschalter 8 ist im Unterschied zu Fig. 1 bei jeder zweiten Schaltgruppe 4.1, ...4.n am Verbindungspunkt des vierten ansteuerbaren bidirektionalen Leistungshalbleiterschalters 8 mit dem dritten ansteuerbaren bidirektionalen Leistungshalbleiterschalter 7 und die Verbindung des sechsten ansteuerbaren bidirektionale Leistungshalbleiterschalters 10 mit dem zweiten ansteuerbaren bidirektionalen Leistungshalbleiterschalter 6 ist bei jeder zweiten Schaltgruppe 4.1, ...4.n am Verbindungspunkt des zweiten ansteuerbaren bidirektionalen Leistungshalbleiterschalters 6 mit dem ersten ansteuerbaren bidirektionalen Leistungshalbleiterschalter 5. Desweiteren ist der Verbindungspunkt des ersten ansteuerbaren bidirektionalen Leistungshalbleiterschalters 14 mit dem zweiten ansteuerbaren bidirektionalen Leistungshalbleiterschalter 15 der dritte Schaltgruppe 12 mit dem zweiten ansteuerbaren bidirektionalen Leistungshalbleiterschalter 6 der n-ten zweiten Schaltgruppe 4.n verbunden. Zudem ist der Verbindungspunkt des ersten ansteuerbaren bidirektionalen Leistungshalbleiterschalters 16 mit dem zweiten ansteuerbaren bidirektionalen Leistungshalbleiterschalter 17 der vierten Schaltgruppe 13 mit dem vierten ansteuerbaren bidirektionalen Leistungshalbleiterschalter 8 der n-ten zweiten Schaltgruppe 4.n verbunden und der Kondensator 18 der dritten Schaltgruppe 12 mit dem Kondensator 19 der vierten Schaltgruppe 13 verbunden.

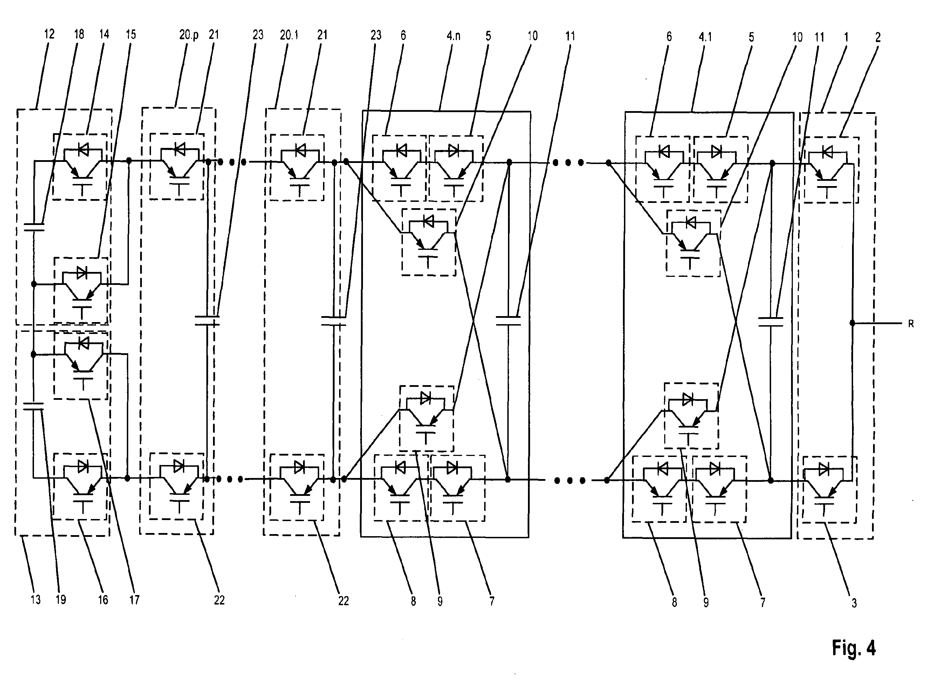

In Fig. 4 ist eine vierte Ausführungsform einer erfindungsgemässen Umrichterschaltung dargestellt. Ausgehend von Fig. 2 weist die Umrichterschaltung in Fig. 4 jede fünfte Schaltgruppe 20.1,...20.p einen mit dem ersten und zweiten ansteuerbaren bidirektionalen Leistungshalbleiterschalter 21, 22 der zugehörigen fünften Schaltgruppe 20.1,...20.p verbundenen Kondensator 23 auf, wobei der Kondensator 23 der ersten fünften Schaltgruppe 20.1 mit dem Verbindungspunkt des ersten ansteuerbaren bidirektionalen Leistungshalbleiterschalters 21 der ersten fünften Schaltgruppe 20.1 mit dem Verbindungspunkt des zweiten ansteuerbaren bidirektionalen Leistungshalbleiterschalters 6 mit dem sechsten ansteuerbaren bidirektionalen Leistungshalbleiterschalter 10 n-ten zweiten Schaltgruppe 4.n verbunden ist. Der Kondensator 23 der ersten fünften Schaltgruppe 20.1 ist zudem mit dem Verbindungspunkt des zweiten ansteuerbaren bidirektionalen Leistungshalbleiterschalters 22 der ersten fünften Schaltgruppe 20.1 mit dem Verbindungspunkt des vierten ansteuerbaren bidirektionalen Leistungshalbleiterschalters 8 mit dem fünften ansteuerbaren bidirektionalen Leistungshalbleiterschalter 9 der n-ten zweiten Schaltgruppe 4.n verbunden. Werden beispielsweise bei der vierten Ausführungsform nach Fig. 4 n=1 zweite Schaltgruppen 4.1, ...4.n und p=1 fünfte Schaltgruppen 20.1,... 20.p gewählt, so ist eine Umrichterschaltung zur Schaltung von neun Schaltspannungsniveaus mit lediglich vier Kondensatoren erreicht, wobei mittels des Kondensator 23 der jeweiligen fünften Schaltgruppen 20.1,... 20.p vorteilhaft redundante Schaltzustandskombinationen der ansteuerbaren bidirektionalen Leistungshalbleiterschalter, d.h. mehrere Schaltzustandskombinationen ergeben dasselbe Schaltspannungsniveau, erreicht werden können, wodurch allgemein die Spannung am jeweiligen Kondensator 11, 18, 19, 23 der Umrichterschaltung stabilisiert werden kann und die ansteuerbaren bidirektionalen Leistungshalbleiterschalter der Umrichterschaltung weniger Verluste generieren und damit effizienter ausgenutzt werden können.

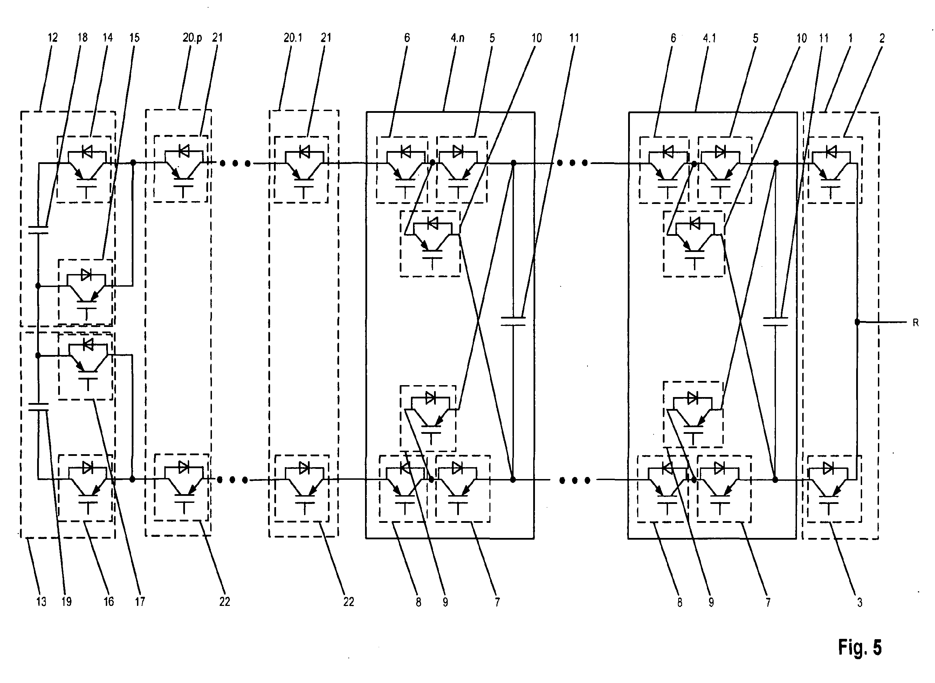

In Fig. 5 ist eine fünfte Ausführungsform einer erfindungsgemässen Umrichterschaltung dargestellt. Ausgehend von Fig. 2 ist in Fig. 5 in ähnlicher Weise wie in Fig. 3 der erste ansteuerbare bidirektionale Leistungshalbleiterschalter 2 der ersten Schaltgruppe 1 mit dem Verbindungspunkt des ersten ansteuerbaren bidirektionalen Leistungshalbleiterschalters 5 mit dem Kondensator 11 der ersten zweiten Schaltgruppe 4.1 verbunden und der zweite ansteuerbare bidirektionale Leistungshalbleiterschalter 3 der ersten Schaltgruppe 1 mit dem Verbindungspunkt des dritten ansteuerbaren bidirektionalen Leistungshalbleiterschalters 7 mit dem Kondensator 11 der ersten zweiten Schaltgruppe 4.1 verbunden. Gemäss Fig. 5 ist die Verbindung des fünften ansteuerbaren bidirektionale Leistungshalbleiterschalters 9 mit dem vierten ansteuerbaren bidirektionalen Leistungshalbleiterschalter 8 bei jeder zweiten Schaltgruppe 4.1, ...4.n am Verbindungspunkt des vierten ansteuerbaren bidirektionalen Leistungshalbleiterschalters 8 mit dem dritten ansteuerbaren bidirektionalen Leistungshalbleiterschalter 7. Weiterhin ist die Verbindung des sechsten ansteuerbaren bidirektionale Leistungshalbleiterschalters 10 mit dem zweiten ansteuerbaren bidirektionalen Leistungshalbleiterschalter 6 bei jeder zweiten Schaltgruppe 4.1, ...4.n am Verbindungspunkt des zweiten ansteuerbaren bidirektionalen Leistungshalbleiterschafters 6 mit dem ersten ansteuerbaren bidirektionalen Leistungshalbleiterschalter 5. Zudem ist der erste ansteuerbare bidirektionale Leistungshalbleiterschalter 21 der ersten fünften Schaltgruppe 20.1 mit dem zweiten ansteuerbaren bidirektionalen Leistungshalbleiterschalter 6 der n-ten zweiten Schaltgruppe 4.n verbunden und der der zweite ansteuerbare bidirektionale Leistungshalbleiterschalter 22 der ersten fünften Schaltgruppe 20.1 mit dem vierten ansteuerbaren bidirektionalen Leistungshalbleiterschalter 8 der n-ten zweiten Schaltgruppe 4.n verbunden. Der Verbindungspunkt des ersten ansteuerbaren bidirektionalen Leistungshalbleiterschalters 14 mit dem zweiten ansteuerbaren bidirektionalen Leistungshalbleiterschalter 15 der dritte Schaltgruppe 12 ist ferner mit dem ersten ansteuerbaren bidirektionalen Leistungshalbleiterschalter 21 der p-ten fünften Schaltgruppe 20.p verbunden und der Verbindungspunkt des ersten ansteuerbaren bidirektionalen Leistungshalbleiterschalters 16 mit dem zweiten ansteuerbaren bidirektionalen Leistungshalbleiterschalter 17 der vierten Schaltgruppe 13 ist mit dem zweiten ansteuerbaren bidirektionalen Leistungshalbleiterschalter 22 der p-ten fünften Schaltgruppe 20.p verbunden. Schliesslich ist der Kondensator 18 der dritten Schaltgruppe 12 mit dem Kondensator 19 der vierten Schaltgruppe 13 verbunden. Entsprechend Fig. 2 kann bei der Ausführungsform nach Fig. 5 mittels der p fünften Schaltgruppen 20.1,... 20.p vorteilhaft zusätzliche Redundanz bezüglich der ansteuerbaren bidirektionalen Leistungshalbleiterschalter der Umrichterschaltung erreicht werden.

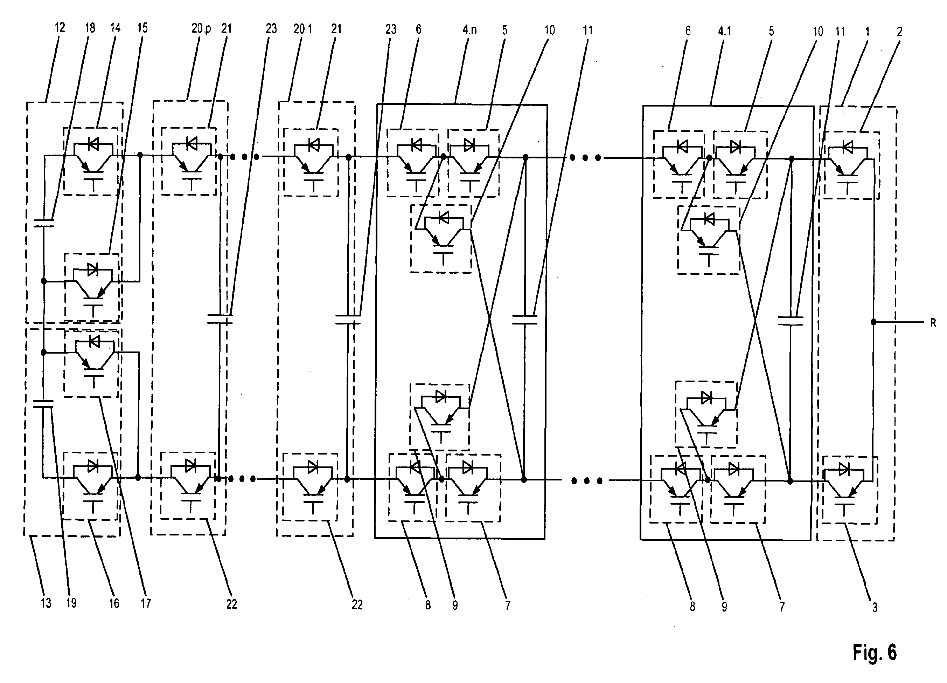

In Fig. 6 ist eine sechste Ausführungsform einer erfindungsgemässen Umrichterschaltung dargestellt. Ausgehend von Fig. 5 weist in Fig. 6 jede fünfte Schaltgruppe 20.1,...20.p einen mit dem ersten und zweiten ansteuerbaren bidirektionalen Leistungshalbleiterschalter 21, 22 der zugehörigen fünften Schaltgruppe 20.1,...20.p verbundenen Kondensator 23 auf, wobei der Kondensator 23 der ersten fünften Schaltgruppe 20.1 mit dem Verbindungspunkt des ersten ansteuerbaren bidirektionalen Leistungshalbleiterschalters 21 der ersten fünften Schaltgruppe 20.1 mit dem zweiten ansteuerbaren bidirektionalen Leistungshalbleiterschalter 6 der n-ten zweiten Schaltgruppe 4.n verbunden ist. Desweiteren ist der Kondensator 23 der ersten fünften Schaltgruppe 20.1 mit dem Verbindungspunkt des zweiten ansteuerbaren bidirektionalen Leistungshalbleiterschalters 22 der ersten fünften Schaltgruppe 20.1 mit dem vierten ansteuerbaren bidirektionalen Leistungshalbleiterschalter 8 der n-ten zweiten Schaltgruppe 4.n verbunden. Werden beispielsweise bei der sechsten Ausführungsform nach Fig. 6 n=1 zweite Schaltgruppen 4.1, ...4.n und p=1 fünfte Schaltgruppen 20.1,... 20.p gewählt, so ist eine Umrichterschaltung zur Schaltung von neun Schaltspannungsniveaus mit lediglich vier Kondensatoren erreicht, wobei mittels des Kondensator 23 der jeweiligen fünften Schaltgruppen 20.1,... 20.p vorteilhaft redundante Schaltzustandskombinationen der ansteuerbaren bidirektionalen Leistungshalbleiterschalter, d.h. mehrere Schaltzustandskombinationen ergeben dasselbe Schaltspannungsniveau, erreicht werden können, wodurch allgemein die Spannung am jeweiligen Kondensator 11, 18, 19, 23 der Umrichterschaltung stabilisiert werden kann und die ansteuerbaren bidirektionalen Leistungshalbleiterschalter der Umrichterschaltung weniger Verluste generieren und damit effizienter ausgenutzt werden können.

Als weitere Variante zu Fig. 5 und im Unterschied zu Fig. 6 ist es auch denkbar, dass nur die erste fünfte Schaltgruppe 20.1 einen mit dem ersten und zweiten ansteuerbaren bidirektionalen Leistungshalbleiterschalter 21, 22 ersten fünften Schaltgruppe 20.1 verbundenen Kondensator 23 auf, wobei der Kondensator 23 der ersten fünften Schaltgruppe 20.1 mit dem Verbindungspunkt des ersten ansteuerbaren bidirektionalen Leistungshalbleiterschalters 21 der ersten fünften Schaltgruppe 20.1 mit dem zweiten ansteuerbaren bidirektionalen Leistungshalbleiterschalter 6 der n-ten zweiten Schaltgruppe 4.n verbunden ist. Desweiteren ist der Kondensator 23 der ersten fünften Schaltgruppe 20.1 mit dem Verbindungspunkt des zweiten ansteuerbaren bidirektionalen Leistungshalbleiterschalters 22 der ersten fünften Schaltgruppe 20.1 mit dem vierten ansteuerbaren bidirektionalen Leistungshalbleiterschalter 8 der n-ten zweiten Schaltgruppe 4.n verbunden. Für n=1 zweite Schaltgruppen 4.1, ...4.n und p=2 fünfte Schaltgruppen 20.1,... 20.p, wobei die erste fünfte Schaltgruppen 20.1 den Kondensator 23 und die zweite fünfte Schaltgruppen 20.2 dann keinen Kondensator 23 aufweist, ist eine Umrichterschaltung zur Schaltung von neun Schaltspannungsniveaus mit lediglich vier Kondensatoren erreicht, wobei mittels des Kondensator 23 der jeweiligen fünften Schaltgruppen 20.1,... 20.p vorteilhaft redundante Schaltzustandskombinationen der ansteuerbaren bidirektionalen Leistungshalbleiterschalter, d.h. mehrere Schaltzustandskombinationen ergeben dasselbe Schaltspannungsniveau, erreicht werden können, wodurch allgemein die Spannung am jeweiligen Kondensator 11, 18, 19, 23 der Umrichterschaltung stabilisiert werden kann und die ansteuerbaren bidirektionalen Leistungshalbleiterschalter der Umrichterschaltung weniger Verluste generieren und damit effizienter ausgenutzt werden können.

Als weitere Variante zu Fig. 5 und im Unterschied zu Fig. 6 ist es ebenfalls denkbar, dass die erste fünfte Schaltgruppe 20.1 und mindestens eine weitere fünfte Schaltgruppe 20.2, ..., 20.p jeweils einen mit dem ersten und zweiten ansteuerbaren bidirektionalen Leistungshalbleiterschalter 21, 22 der zugehörigen fünften Schaltgruppe 20.1, 20.2,..., 20.p verbundenen Kondensator 23 auf, wobei der Kondensator 23 der ersten fünften Schaltgruppe 20.1 mit dem Verbindungspunkt des ersten ansteuerbaren bidirektionalen Leistungshalbleiterschalters 21 der ersten fünften Schaltgruppe 20.1 mit dem zweiten ansteuerbaren bidirektionalen Leistungshalbleiterschalter 6 der n-ten zweiten Schaltgruppe 4.n verbunden ist. Desweiteren ist der Kondensator 23 der ersten fünften Schaltgruppe 20.1 mit dem Verbindungspunkt des zweiten ansteuerbaren bidirektionalen Leistungshalbleiterschalters 22 der ersten fünften Schaltgruppe 20.1 mit dem vierten ansteuerbaren bidirektionalen Leistungshalbleiterschalter 8 der n-ten zweiten Schaltgruppe 4.n verbunden.

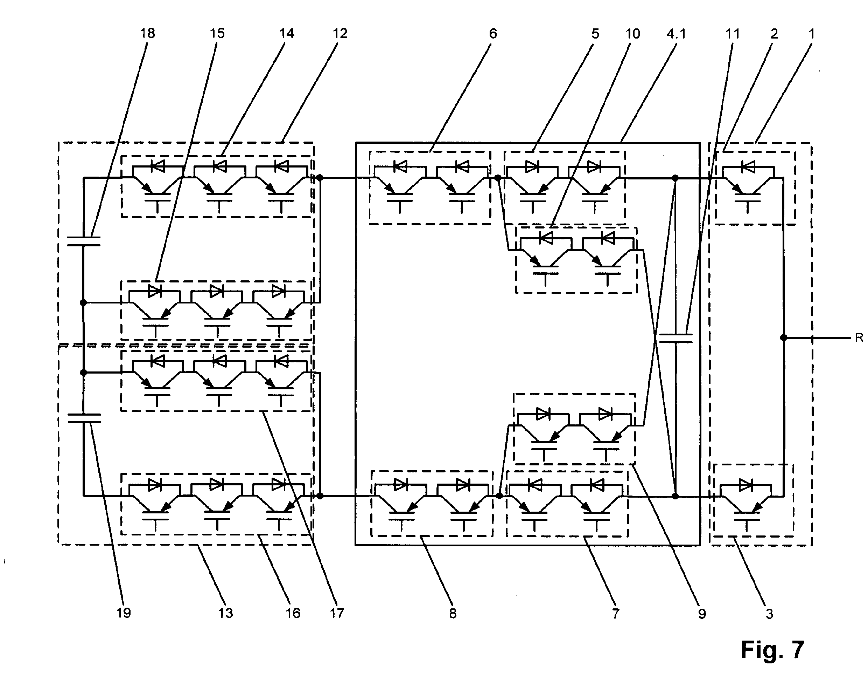

Bei sämtlichen Ausführungsformen ist es denkbar, dass der erste, zweite, dritte, vierte, fünfte und sechste ansteuerbare bidirektionale Leistungshalbleiterschalter 5, 6, 7, 8, 9, 10 einer jeden zweiten Schaltgruppe 4.1, ...4.n vorzugsweise jeweils mindestens zwei ansteuerbare bidirektionale Schaltelemente aufweist, wobei die ansteuerbaren bidirektionalen Schaltelemente in Serie geschaltet sind. Vorteilhaft lässt sich damit die zu schaltende Spannung an dem jeweiligen ansteuerbaren bidirektionalen Leistungshalbleiterschalter 5, 6, 7, 8, 9, 10 erhöhen. Darüber hinaus kann auch der erste und zweite ansteuerbare bidirektionale Leistungshalbleiterschalter 21, 22 einer jeden fünften Schaltgruppe 20.1, ...20.p jeweils mindestens zwei ansteuerbare bidirektionale Schaltelemente aufweisen, wobei die ansteuerbaren bidirektionalen Schaltelemente in Serie geschaltet sind. Auch in diesem Fall lässt sich die zu schaltende Spannung an dem jeweiligen ansteuerbaren bidirektionalen Leistungshalbleiterschalter 21, 22 erhöhen. Ferner kann auch der erste und zweite ansteuerbare bidirektionale Leistungshalbleiterschalter 14, 15 der dritten Schaltgruppe 12 und der erste und zweite ansteuerbare bidirektionale Leistungshalbleiterschalter 16, 17 der vierten Schaltgruppe 13 jeweils mindestens zwei ansteuerbare bidirektionale Schaltelemente aufweisen, wobei die ansteuerbaren bidirektionalen Schaltelemente in Serie geschaltet sind. Auch dann lässt sich die zu schaltende Spannung an dem jeweiligen ansteuerbaren bidirektionalen Leistungshalbleiterschalter 14, 15, 16, 17 mit Vorteil erhöhen. Demnach ist einen beliebige Anzahl an ansteuerbaren bidirektionalen Schaltelemente für jeden ansteuerbaren bidirektionalen Leistungshalbleiterschalter 5, 6, 7, 8, 9, 10, 14, 15, 16, 17, 21, 22 bezüglich der Ausführungsformen nach Fig. 1 bis Fig. 6 möglich. In Fig. 7 ist dazu eine siebte Ausführungsform einer erfindungsgemässen Umrichterschaltung dargestellt, wobei beispielhaft n=1 zweite Schaltgruppe 4.1, ...4.n entsprechend Fig. 3 vorgesehen sind und der erste, zweite, dritte, vierte, fünfte und sechste ansteuerbare bidirektionale Leistungshalbleiterschalter 5, 6, 7, 8, 9, 10 der einzigen zweiten Schaltgruppe 4.1 jeweils zwei ansteuerbare bidirektionale Schaltelemente aufweist und der erste und zweite ansteuerbare bidirektionale Leistungshalbleiterschalter 14, 15, 16, 17 der dritten und vierten Schaltgruppe 12, 13 jeweils drei ansteuerbare bidirektionale Schaltelemente aufweist.

Vorzugsweise ist das jeweilige ansteuerbare bidirektionale Schaltelement eines jeden ansteuerbaren bidirektionalen Leistungshalbleiterschalters der Umrichterschaltung beispielsweise durch einen Bipolartransistor mit isoliert angeordneter Ansteuerelektrode (IGBT - Insulated Gate Bipolartransistor) und durch eine dazu antiparallel geschaltete Diode gebildet. Um eine hohe Spannung an den Kondensatoren 18, 19 der dritten und vierten Schaltgruppe 12, 13 schalten zu können, ist das ansteuerbare bidirektionale Schaltelement des ersten und zweiten ansteuerbaren bidirektionalen Leistungshalbleiterschalters 14, 15, 16, 17 der dritten und vierten Schaltgruppe 12, 13 vorzugsweise durch einen integrierten Thyristor mit kommutierter Ansteuerelektrode (IGCT) und durch eine dazu antiparallel geschaltete Diode gebildet.

Insgesamt stellt die erfindungsgemässe Umrichterschaltung zur Schaltung einer Vielzahl von Schaltspannungsniveaus somit durch eine geringe gespeicherte elektrische Energie während ihres Betriebes und durch einen platzsparenden Aufbau gekennzeichnete und damit unkomplizierte, robuste und wenig störungsanfällige Lösung dar.

### Bezugszeichenliste

- 1: erste Schaltgruppe
- 2: erster ansteuerbarer bidirektionaler Leistungshalbleiterschalter der ersten Schaltgruppe
- 3: zweiter ansteuerbarer bidirektionaler Leistungshalbleiterschalter der ersten Schaltgruppe
- 4.1, ...4.n: zweite Schaltgruppen
- 5: erster ansteuerbarer bidirektionaler Leistungshalbleiterschalter der zweiten Schaltgruppen
- 6: zweiter ansteuerbarer bidirektionaler Leistungshalbleiterschalter der zweiten Schaltgruppen
- 7: dritter ansteuerbarer bidirektionaler Leistungshalbleiterschalter der zweiten Schaltgruppen
- 8: vierter ansteuerbarer bidirektionaler Leistungshalbleiterschalter der zweiten Schaltgruppen
- 9: fünfter ansteuerbarer bidirektionaler Leistungshalbleiterschalter der zweiten Schaltgruppen
- 10: sechster ansteuerbarer bidirektionaler Leistungshalbleiterschalter der zweiten Schaltgruppen
- 11: Kondensator der zweiten Schaltgruppen
- 12: dritte Schaltgruppe
- 13: vierte Schaltgruppe
- 14: erster ansteuerbarer bidirektionaler Leistungshalbleiterschalter der dritten Schaltgruppe
- 15: zweiter ansteuerbarer bidirektionaler Leistungshalbleiterschalter der dritten Schaltgruppe
- 16: erster ansteuerbarer bidirektionaler Leistungshalbleiterschalter der vierten Schaltgruppe
- 17: zweiter ansteuerbarer bidirektionaler Leistungshalbleiterschalter der vierten Schaltgruppe
- 18: Kondensator der der dritten Schaltgruppe
- 19: Kondensator der vierten Schaltgruppe
- 20.1, ...20.p: fünfte Schaltgruppen
- 21: erster ansteuerbarer bidirektionaler Leistungshalbleiterschalter der fünften Schaltgruppen
- 22: zweiter ansteuerbarer bidirektionaler Leistungshalbleiterschalter der fünften Schaltgruppen
- 23: Kondensator der fünften Schaltgruppe

## Patentansprüche

1. Umrichterschaltung zur Schaltung einer Vielzahl von Schaltspannungsniveaus, mit einer für jede Phase (R, S, T) vorgesehenen ersten Schaltgruppe (1), wobei die erste Schaltgruppe (1) durch einen ersten ansteuerbaren bidirektionalen Leistungshalbleiterschalter (2) und einen zweiten ansteuerbaren bidirektionalen Leistungshalbleiterschalter (3) gebildet ist und der erste und der zweite ansteuerbare bidirektionale Leistungshalbleiterschalter (2, 3) der ersten Schaltgruppe (1) miteinander verbunden sind,
wobei n zweite Schaltgruppen (4.1, ...4.n) vorgesehen sind, welche jeweils einen ersten, zweiten, dritten, vierten, fünften und sechsten ansteuerbaren bidirektionalen Leistungshalbleiterschalter (5, 6, 7, 8, 9, 10) und einen Kondensator (11) aufweisen, wobei n ≥ 1 ist und der erste ansteuerbare bidirektionale Leistungshalbleiterschalter (5) antiseriell zu dem zweiten ansteuerbaren bidirektionalen Leistungshalbleiterschalter (6) geschaltet ist, der dritte ansteuerbare bidirektionale Leistungshalbleiterschalter (7) antiseriell zu dem vierten ansteuerbaren bidirektionalen Leistungshalbleiterschalter (8) geschaltet ist, der erste ansteuerbare bidirektionale Leistungshalbleiterschalter (5) mit dem Kondensator (11) verbunden ist, der dritte ansteuerbare bidirektionale Leistungshalbleiterschalter (7) mit dem Kondensator (11) verbunden ist, der fünfte ansteuerbare bidirektionale Leistungshalbleiterschalter (9) unmittelbar mit dem vierten ansteuerbaren bidirektionalen Leistungshalbleiterschalter (8) und unmittelbar mit dem Verbindungspunkt des ersten ansteuerbaren bidirektionalen Leistungshalbleiterschalter (5) mit dem Kondensator (11) verbunden ist und der sechste ansteuerbare bidirektionale Leistungshalbleiterschalter (10) unmittelbar mit dem zweiten ansteuerbaren bidirektionalen Leistungshalbleiterschalter (6) und unmittelbar mit dem Verbindungspunkt des dritten ansteuerbaren bidirektionalen Leistungshalbleiterschalter (7) mit dem Kondensator (11) verbunden ist, wobei für n > 1 jede der n zweiten Schaltgruppen (4.1, ...4.n) verkettet mit der jeweils benachbarten zweiten Schaltgruppe (4.1, ...4.n) ist,
wobei die erste Schaltgruppe (1) mit der ersten zweiten Schaltgruppe (4.1) verbunden ist,
wobei eine dritte Schaltgruppe (12) und eine vierte Schaltgruppe (13) vorgesehen ist, welche jeweils einen ersten ansteuerbaren bidirektionalen Leistungshalbleiterschalter (14, 16), einen zweiten ansteuerbaren bidirektionalen Leistungshalbleiterschalter (15, 17) und einen mit dem ersten und zweiten ansteuerbaren bidirektionalen Leistungshalbleiterschalter (14, 15, 16, 17) verbundenen Kondensator (18, 19) aufweisen, wobei der erste und zweite ansteuerbare bidirektionale Leistungshalbleiterschalter (14, 15,16, 17) miteinander verbunden sind,
wobei die dritte Schaltgruppe (12) mit der n-ten zweiten Schaltgruppe (4.n) verbunden ist,
wobei die vierte Schaltgruppe (13) mit der n-ten zweiten Schaltgruppe (4.n) verbunden ist, und
wobei die dritte Schaltgruppe (12) mit der vierten Schaltgruppe (13) verbunden ist.

2. Umrichterschaltung zur Schaltung einer Vielzahl von Schaltspannungsniveaus, mit einer für jede Phase (R, S, T) vorgesehenen ersten Schaltgruppe (1), wobei die erste Schaltgruppe (1) durch einen ersten ansteuerbaren bidirektionalen Leistungshalbleiterschalter (2) und einen zweiten ansteuerbaren bidirektionalen Leistungshalbleiterschalter (3) gebildet ist und der erste und der zweite ansteuerbare bidirektionale Leistungshalbleiterschalter (2, 3) der ersten Schaltgruppe (1) miteinander verbunden sind,
wobei n zweite Schaltgruppen (4.1, ...4.n) vorgesehen sind, welche jeweils einen ersten, zweiten, dritten, vierten, fünften und sechsten ansteuerbaren bidirektionalen Leistungshalbleiterschalter (5, 6, 7, 8, 9, 10) und einen Kondensator (11) aufweisen, wobei n ≥ 1 ist und der erste ansteuerbare bidirektionale Leistungshalbleiterschalter (5) antiseriell zu dem zweiten ansteuerbaren bidirektionalen Leistungshalbleiterschalter (6) geschaltet ist, der dritte ansteuerbare bidirektionale Leistungshalbleiterschalter (7) antiseriell zu dem vierten ansteuerbaren bidirektionalen Leistungshalbleiterschalter (8) geschaltet ist, der erste ansteuerbare bidirektionale Leistungshalbleiterschalter (5) mit dem Kondensator (11) verbunden ist, der dritte ansteuerbare bidirektionale Leistungshalbleiterschalter (7) mit dem Kondensator (11) verbunden ist, der fünfte ansteuerbare bidirektionale Leistungshalbleiterschalter (9) unmittelbar mit dem vierten ansteuerbaren bidirektionalen Leistungshalbleiterschalter (8) und unmittelbar mit dem Verbindungspunkt des ersten ansteuerbaren bidirektionalen Leistungshalbleiterschalter (5) mit dem Kondensator (11) verbunden ist und der sechste ansteuerbare bidirektionale Leistungshalbleiterschalter (10) unmittelbar mit dem zweiten ansteuerbaren bidirektionalen Leistungshalbleiterschalter (6) und unmittelbar mit dem Verbindungspunkt des dritten ansteuerbaren bidirektionalen Leistungshalbleiterschalter (7) mit dem Kondensator (11) verbunden ist, wobei für n > 1 jede der n zweiten Schaltgruppen (4.1, ...4.n) verkettet mit der jeweils benachbarten zweiten Schaltgruppe (4.1, ...4.n) ist,
wobei die erste Schaltgruppe (1) mit der ersten zweiten Schaltgruppe (4.1) verbunden ist, wobei eine dritte Schaltgruppe (12) und eine vierte Schaltgruppe (13) vorgesehen ist, welche jeweils einen ersten ansteuerbaren bidirektionalen Leistungshalbleiterschalter (14, 16), einen zweiten ansteuerbaren bidirektionalen Leistungshalbleiterschalter (15, 17) und einen mit dem ersten und zweiten ansteuerbaren bidirektionalen Leistungshalbleiterschalter (14, 15,16, 17) verbundenen Kondensator (18, 19) aufweisen, wobei der erste und zweite ansteuerbare bidirektionale Leistungshalbleiterschalter (14, 15,16, 17) miteinander verbunden sind,
wobei p fünfte Schaltgruppen (20.1,... 20.p) vorgesehen sind, welche jeweils einen ersten und einen zweiten ansteuerbaren bidirektionalen Leistungshalbleiterschalter (21, 22), wobei p ≥ 1 ist,
wobei für p > 1 jede der p fünften Schaltgruppen (20.1,... 20.p) verkettet mit der jeweils benachbarten fünften Schaltgruppe (20.1,... 20.p) ist,
wobei die erste fünfte Schaltgruppe (20.1) mit der n-ten zweiten Schaltgruppe (4.n) verbunden ist,
wobei die dritte Schaltgruppe (12) mit der p-ten fünften Schaltgruppe (20.p) verbunden ist,
wobei die vierte Schaltgruppe (13) mit der p-ten fünften Schaltgruppe (20.p) verbunden ist, und
wobei die dritte Schaltgruppe (12) mit der vierten Schaltgruppe (13) verbunden ist.

3. Umrichterschaltung nach Anspruch 1, wobei der erste ansteuerbare bidirektionale Leistungshalbleiterschalter (2) der ersten Schaltgruppe (1) mit dem Verbindungspunkt des ersten ansteuerbaren bidirektionalen Leistungshalbleiterschalters (5) mit dem Kondensator (11) der ersten zweiten Schaltgruppe (4.1) verbunden ist und der zweite Leistungshalbleiterschalter (3) der ersten Schaltgruppe (1) mit dem Verbindungspunkt des dritten ansteuerbaren bidirektionalen Leistungshalbleiterschalters (7) mit dem Kondensator (11) der ersten zweiten Schaltgruppe (4.1) verbunden ist,
wobei der Verbindungspunkt des ersten ansteuerbaren bidirektionalen Leistungshalbleiterschalters (14) mit dem zweiten ansteuerbaren bidirektionalen Leistungshalbleiterschalter (15) der dritte Schaltgruppe (12) mit dem Verbindungspunkt des zweiten ansteuerbaren bidirektionalen Leistungshalbleiterschalters (6) mit dem sechsten ansteuerbaren bidirektionalen Leistungshalbleiterschalter (10) der n-ten zweiten Schaltgruppe (4.n) verbunden ist,
wobei der Verbindungspunkt des ersten ansteuerbaren bidirektionalen Leistungshalbleiterschalters (16) mit dem zweiten ansteuerbaren bidirektionalen Leistungshalbleiterschalter (17) der vierten Schaltgruppe (13) mit dem Verbindungspunkt des vierten ansteuerbaren bidirektionalen Leistungshalbleiterschalters (8) mit dem fünften ansteuerbaren bidirektionalen Leistungshalbleiterschalter (9) der n-ten zweiten Schaltgruppe (4.n) verbunden ist, und
wobei der Kondensator (18) der dritten Schaltgruppe (12) mit dem Kondensator (19) der vierten Schaltgruppe (13) verbunden ist.

4. Umrichterschaltung nach Anspruch 1, wobei der erste ansteuerbare bidirektionale Leistungshalbleiterschalter (2) der ersten Schaltgruppe (1) mit dem Verbindungspunkt des ersten ansteuerbaren bidirektionalen Leistungshalbleiterschalters (5) mit dem Kondensator (11) der ersten zweiten Schaltgruppe (4.1) verbunden ist und der zweite ansteuerbare bidirektionale Leistungshalbleiterschalter (3) der ersten Schaltgruppe (1) mit dem Verbindungspunkt des dritten ansteuerbaren bidirektionalen Leistungshalbleiterschalters (7) mit dem Kondensator (11) der ersten zweiten Schaltgruppe (4.1) verbunden ist,
wobei die Verbindung des fünften ansteuerbaren bidirektionale Leistungshalbleiterschalters (9) mit dem vierten ansteuerbaren bidirektionalen Leistungshalbleiterschalter (8) bei jeder zweiten Schaltgruppe (4.1, ...4.n) am Verbindungspunkt des vierten ansteuerbaren bidirektionalen Leistungshalbleiterschalters (8) mit dem dritten ansteuerbaren bidirektionalen Leistungshalbleiterschalter (7) ist und die Verbindung des sechsten ansteuerbaren bidirektionale Leistungshalbleiterschalters (10) mit dem zweiten ansteuerbaren bidirektionalen Leistungshalbleiterschalter (6) bei jeder zweiten Schaltgruppe (4.1, ...4.n) am Verbindungspunkt des zweiten ansteuerbaren bidirektionalen Leistungshalbleiterschalters (6) mit dem ersten ansteuerbaren bidirektionalen Leistungshalbleiterschalter (5) ist,
wobei der Verbindungspunkt des ersten ansteuerbaren bidirektionalen Leistungshalbleiterschalters (14) mit dem zweiten ansteuerbaren bidirektionalen Leistungshalbleiterschalter (15) der dritte Schaltgruppe (12) mit dem zweiten ansteuerbaren bidirektionalen Leistungshalbleiterschalter (6) der n-ten zweiten Schaltgruppe (4.n) verbunden ist,
wobei der Verbindungspunkt des ersten ansteuerbaren bidirektionalen Leistungshalbleiterschalters (16) mit dem zweiten ansteuerbaren bidirektionalen Leistungshalbleiterschalter (17) der vierten Schaltgruppe (13) mit dem vierten ansteuerbaren bidirektionalen Leistungshalbleiterschalter (8) der n-ten zweiten Schaltgruppe (4.n) verbunden ist, und
wobei der Kondensator (18) der dritten Schaltgruppe (12) mit dem Kondensator (19) der vierten Schaltgruppe (13) verbunden ist.

5. Umrichterschaltung nach Anspruch 2, wobei der erste ansteuerbare bidirektionale Leistungshalbleiterschalter (2) der ersten Schaltgruppe (1) mit dem Verbindungspunkt des ersten ansteuerbaren bidirektionalen Leistungshalbleiterschalters (5) mit dem Kondensator (11) der ersten zweiten Schaltgruppe 4.1 verbunden ist und der zweite ansteuerbare bidirektionale Leistungshalbleiterschalter (3) der ersten Schaltgruppe (1) mit dem Verbindungspunkt des dritten ansteuerbaren bidirektionalen Leistungshalbleiterschalters (7) mit dem Kondensator (11) der ersten zweiten Schaltgruppe (4.1) verbunden ist,
wobei der erste ansteuerbare bidirektionale Leistungshalbleiterschalter (21) der ersten fünften Schaltgruppe (20.1) mit dem Verbindungspunkt des zweiten ansteuerbaren bidirektionalen Leistungshalbleiterschalters (6) mit dem sechsten ansteuerbaren bidirektionalen Leistungshalbleiterschalter (10) der n-ten zweiten Schaltgruppe (4.n) verbunden ist,
wobei der zweite ansteuerbare bidirektionale Leistungshalbleiterschalter (22) der ersten fünften Schaltgruppe (20.1) mit dem Verbindungspunkt des vierten ansteuerbaren bidirektionalen Leistungshalbleiterschalters (8) mit dem fünften ansteuerbaren bidirektionalen Leistungshalbleiterschalter (9) der n-ten zweiten Schaltgruppe (4.n) verbunden ist,
wobei der Verbindungspunkt des ersten ansteuerbaren bidirektionalen Leistungshalbleiterschalters (14) mit dem zweiten ansteuerbaren bidirektionalen Leistungshalbleiterschalter (15) der dritte Schaltgruppe (12) mit dem ersten ansteuerbaren bidirektionalen Leistungshalbleiterschalter (21) der p-ten fünften Schaltgruppe (20.p) verbunden ist,
wobei der Verbindungspunkt des ersten ansteuerbaren bidirektionalen Leistungshalbleiterschalters (16) mit dem zweiten ansteuerbaren bidirektionalen Leistungshalbleiterschalter (17) der vierten Schaltgruppe (13) mit dem zweiten ansteuerbaren bidirektionalen Leistungshalbleiterschalter (22) der p-ten fünften Schaltgruppe (20.p) verbunden ist, und
wobei der Kondensator (18) der dritten Schaltgruppe (12) mit dem Kondensator (19) der vierten Schaltgruppe (13) verbunden ist.

6. Umrichferschaltung nach Anspruch 2, wobei der erste ansteuerbare bidirektionale Leisiungshalbleiterschalter (2) der ersten Schaltgruppe (1) mit dem Verbindungspunkt des ersten ansteuerbaren bidirektionalen Leistungshalbleiterschalters (5) mit dem Kondensator (11) der ersten zweiten Schaltgruppe (4.1) verbunden ist und der zweite ansteuerbare bidirektionale Leistungshalbleiterschalter (3) der ersten Schaltgruppe (1) mit dem Verbindungspunkt des dritten ansteuerbaren bidirektionalen Leistungshalbleiterschalters (7) mit dem Kondensator (11) der ersten zweiten Schaltgruppe (4.1) verbunden ist,
wobei die Verbindung des fünften ansteuerbaren bidirektionale Leistungshalbleiterschalters (9) mit dem vierten ansteuerbaren bidirektionalen Leistungshalbleiterschalter (8) bei jeder zweiten Schaltgruppe (4.1, ...4.n) am Verbindungspunkt des vierten ansteuerbaren bidirektionalen Leistungshalbleiterschalters (8) mit dem dritten ansteuerbaren bidirektionalen Leistungshalbleiterschalter (7) ist und die Verbindung des sechsten ansteuerbaren bidirektionale Leistungshalbleiterschalters (10) mit dem zweiten ansteuerbaren bidirektionalen Leistungshalbleiterschalter (6) bei jeder zweiten Schaltgruppe (4.1, ...4.n) am Verbindungspunkt des zweiten ansteuerbaren bidirektionalen Leistungshalbleiterschalters (6) mit dem ersten ansteuerbaren bidirektionalen Leistungshalbleiterschalter (5) ist,
wobei der erste ansteuerbare bidirektionale Leistungshalbleiterschalter (21) der ersten fünften Schaltgruppe (20.1) mit dem zweiten ansteuerbaren bidirektionalen Leistungshalbleiterschalter (6) der n-ten zweiten Schaltgruppe (4.n) verbunden ist,
wobei der zweite ansteuerbare bidirektionale Leistungshalbleiterschalter (22) der ersten fünften Schaltgruppe (20.1) mit dem vierten ansteuerbaren bidirektionalen Leistungshalbleiterschalter (8) der n-ten zweiten Schaltgruppe (4.n) verbunden ist,
wobei der Verbindungspunkt des ersten ansteuerbaren bidirektionalen Leistungshalbleiterschalters (14) mit dem zweiten ansteuerbaren bidirektionalen Leistungshalbleiterschalter (15) der dritte Schaltgruppe (12) mit dem ersten ansteuerbaren bidirektionalen Leistungshalbleitersctialter (21) der p-ten fünften Schaltgruppe (20.p) verbunden ist,
wobei der Verbindungspunkt des ersten ansteuerbaren bidirektionalen Leistungshalbleiterschalters (16) mit dem zweiten ansteuerbaren bidirektionalen Leistungshalbleiterschalter (17) der vierten Schaltgruppe (13) mit dem zweiten ansteuerbaren bidirektionalen Leistungshalbleiterschalter (22) der p-ten fünften Schaltgruppe (20.p) verbunden ist, und
wobei der Kondensator (18) der dritten Schaltgruppe (12) mit dem Kondensator (19) der vierten Schaltgruppe (13) verbunden ist.

7. Umrichterschaltung nach Anspruch 5, wobei jede fünfte Schaltgruppe (20.1,...20.p) einen mit dem ersten und zweiten ansteuerbaren bidirektionalen Leistungshalbleiterschalter (21, 22) der zugehörigen fünften Schaltgruppe (20.1,...20.p) verbundenen Kondensator (23) aufweist,
wobei der Kondensator (23) der ersten fünften Schaltgruppe (20.1) mit dem Verbindungspunkt des ersten ansteuerbaren bidirektionalen Leistungshalbleiterschalters (21) der ersten fünften Schaltgruppe (20.1) mit dem Verbindungspunkt des zweiten ansteuerbaren bidirektionalen Leistungshalbleiterschalters (6) mit dem sechsten ansteuerbaren bidirektionalen Leistungshalbleiterschalter (10) n-ten zweiten Schaltgruppe (4.n) verbunden ist, und
wobei der Kondensator (23) der ersten fünften Schaltgruppe (20.1) mit dem Verbindungspunkt des zweiten ansteuerbaren bidirektionalen Leistungshalbleiterschalters (22) der ersten fünften Schaltgruppe (20.1) mit dem Verbindungspunkt des vierten ansteuerbaren bidirektionalen Leistungshalbleiterschalters (8) mit dem fünften ansteuerbaren bidirektionalen Leistungshalbleiterschalter (9) der n-ten zweiten Schaltgruppe (4.n) verbunden ist.

8. Umrichterschaltung nach Anspruch 6, wobei jede fünfte Schaltgruppe (20.1,...20.p) einen mit dem ersten und zweiten ansteuerbaren bidirektionalen Leistungshalbleiterschalter (21, 22) der zugehörigen fünften Schaltgruppe (20.1,...20.p) verbundenen Kondensator (23) aufweist,
wobei der Kondensator (23) der ersten fünften Schaltgruppe (20.1) mit dem Verbindungspunkt des ersten ansteuerbaren bidirektionalen Leistungshalbleiterschalters (21) der ersten fünften Schaltgruppe (20.1) mit dem zweiten ansteuerbaren bidirektionalen Leistungshalbleiterschalter (6) der n-ten zweiten Schaltgruppe (4.n) verbunden ist, und
wobei der Kondensator (23) der ersten fünften Schaltgruppe (20.1) mit dem Verbindungspunkt des zweiten ansteuerbaren bidirektionalen Leistungshalbleiterschalters (22) der ersten fünften Schaltgruppe (20.1) mit dem vierten ansteuerbaren bidirektionalen Leistungshalbleiterschalter (8) der n-ten zweiten Schaltgruppe (4.n) verbunden ist.

9. Umrichterschaltung nach Anspruch 6, wobei die erste fünfte Schaltgruppe (20.1) einen mit dem ersten und zweiten ansteuerbaren bidirektionalen Leistungshalbleiterschalter (21, 22) ersten fünften Schaltgruppe (20.1) verbundenen Kondensator (23) aufweist,
wobei der Kondensator (23) der ersten fünften Schaltgruppe (20.1) mit dem Verbindungspunkt des ersten ansteuerbaren bidirektionalen Leistungshalbleiterschalters (21) der ersten fünften Schaltgruppe (20.1) mit dem zweiten ansteuerbaren bidirektionalen Leistungshalbleiterschalter (6) der n-ten zweiten Schaltgruppe (4.n) verbunden ist, und
wobei der Kondensator (23) der ersten fünften Schaltgruppe (20.1) mit dem Verbindungspunkt des zweiten ansteuerbaren bidirektionalen Leistungshalbleiterschalters (22) der ersten fünften Schaltgruppe (20.1) mit dem vierten ansteuerbaren bidirektionalen Leistungshalbleiterschalter (8) der n-ten zweiten Schaltgruppe (4.n) verbunden ist.

10. Umrichterschaltung nach Anspruch 6, wobei die erste fünfte Schaltgruppe (20.1) und mindestens eine weitere fünfte Schaltgruppe (20.2, ..., 20.p) jeweils einen mit dem ersten und zweiten ansteuerbaren bidirektionalen Leistungshalbleiterschalter (21, 22) der zugehörigen fünften Schaltgruppe (20.1, 20.2,..., 20.p) verbundenen Kondensator (23) aufweist,
wobei der Kondensator (23) der ersten fünften Schaltgruppe (20.1) mit dem Verbindungspunkt des ersten ansteuerbaren bidirektionalen Leistungshalbleiterschalters (21) der ersten fünften Schaltgruppe (20.1) mit dem zweiten ansteuerbaren bidirektionalen Leistungshalbleiterschalter (6) der n-ten zweiten Schaltgruppe (4.n) verbunden ist, und
wobei der Kondensator (23) der ersten fünften Schaltgruppe (20.1) mit dem Verbindungspunkt des zweiten ansteuerbaren bidirektionalen Leistungshalbleiterschalters (22) der ersten fünften Schaltgruppe (20.1) mit dem vierten ansteuerbaren bidirektionalen Leistungshalbleiterschalter (8) der n-ten zweiten Schaltgruppe (4.n) verbunden ist.

11. Umrichterschaltung nach einem der Ansprüche 1 bis 10, wobei der erste, zweite, dritte, vierte, fünfte und sechste ansteuerbare bidirektionale Leistungshalbleiterschalter (5, 6, 7, 8, 9, 10) einer jeden zweiten Schaltgruppe (4.1, ...4.n) jeweils mindestens zwei ansteuerbare bidirektionale Schaltelemente aufweist, wobei die ansteuerbaren bidirektionalen Schaltelemente in Serie geschaltet sind.

12. Umrichterschaltung nach einem der Ansprüche 1 bis 11, wobei der erste und zweite ansteuerbare bidirektionale Leistungshalbleiterschalter (21, 22) einer jeden fünften Schaltgruppe (20.1, ...20.p) jeweils mindestens zwei ansteuerbare bidirektionale Schaltelemente aufweist, wobei die ansteuerbaren bidirektionalen Schaltelemente in Serie geschaltet sind.

13. Umrichterschaltung nach einem der Ansprüche 1 bis 12, wobei der erste und zweite ansteuerbare bidirektionale Leistungshalbleiterschalter (14, 15) der dritten Schaltgruppe (12) und der erste und zweite ansteuerbare bidirektionale Leistungshalbleiterschalter (16, 17) der vierten Schaltgruppe (13) jeweils mindestens zwei ansteuerbare bidirektionale Schaltelemente aufweist, wobei die ansteuerbaren bidirektionalen Schaltelemente in Serie geschaltet sind.

## Claims

1. Converter circuit for switching a large number of switching voltage levels, comprising a first switching group (1) provided for each phase (R, S, T), wherein the first switching group (1) is formed by a first drivable bidirectional power semiconductor switch (2) and a second drivable bidirectional power semiconductor switch (3) and the first and the second drivable bidirectional power semiconductor switch (2, 3) of the first switching group (1) are connected to one another,
wherein n second switching groups (4.1, ...4.n) are provided, each having a first, second, third, fourth, fifth and sixth drivable bidirectional power semiconductor switch (5, 6, 7, 8, 9, 10) and capacitor (11), wherein n ≥ 1 and the first drivable bidirectional power semiconductor switch (5) is reverse-connected in series with the second drivable bidirectional power semiconductor switch (6), the third drivable bidirectional power semiconductor switch (7) is reverse-connected in series with the fourth drivable bidirectional power semiconductor switch (8), the first drivable bidirectional power semiconductor switch (5) is connected to the capacitor (11), the third drivable bidirectional power semiconductor switch (7) is connected to the capacitor (11), the fifth drivable bidirectional power semiconductor switch (9) is connected directly to the fourth drivable bidirectional power semiconductor switch (8) and directly to the junction point between the first drivable bidirectional power semiconductor switch (5) and the capacitor (11), and the sixth drivable bidirectional power semiconductor switch (10) is connected directly to the second drivable bidirectional power semiconductor switch (6) and directly to the junction point between the third drivable bidirectional power semiconductor switch (7) and the capacitor (11),
wherein for n > 1 each of the n second switching groups (4.1, ...4.n) is interlinked with the respectively adjacent second switching group (4.1, ...4.n),
wherein the first switching group (1) is connected to the first second switching group (4.1),
wherein a third switching group (12) and a fourth switching group (13) are provided, each having a first drivable bidirectional power semiconductor switch (14, 16), a second drivable bidirectional power semiconductor switch (15, 17) and a capacitor (18, 19) connected to the first and second drivable bidirectional power semiconductor switches (14, 15, 16, 17), wherein the first and second drivable bidirectional power semiconductor switches (14, 15, 16, 17) are connected to one another,
wherein the third switching group (12) is connected to the n-th second switching group (4.n),
wherein the fourth switching group (13) is connected to the n-th second switching group (4.n), and
wherein the third switching group (12) is connected to the fourth switching group (13).

2. Converter circuit for switching a large number of switching voltage levels, comprising a first switching group (1) provided for each phase (R, S, T), wherein the first switching group (1) is formed by a first drivable bidirectional power semiconductor switch (2) and a second drivable bidirectional power semiconductor switch (3) and the first and the second drivable bidirectional power semiconductor switch (2, 3) of the first switching group (1) are connected to one another,
wherein n second switching groups (4.1, ...4.n) are provided, each having a first, second, third, fourth, fifth and sixth drivable bidirectional power semiconductor switch (5, 6, 7, 8, 9, 10) and capacitor (11), wherein n ≥ 1 and the first drivable bidirectional power semiconductor switch (5) is reverse-connected in series with the second drivable bidirectional power semiconductor switch (6), the third drivable bidirectional power semiconductor switch (7) is reverse-connected in series with the fourth drivable bidirectional power semiconductor switch (8), the first drivable bidirectional power semiconductor switch (5) is connected to the capacitor (11), the third drivable bidirectional power semiconductor switch (7) is connected to the capacitor (11), the fifth drivable bidirectional power semiconductor switch (9) is connected directly to the fourth drivable bidirectional power semiconductor switch (8) and directly to the junction point between the first drivable bidirectional power semiconductor switch (5) and the capacitor (11), and the sixth drivable bidirectional power semiconductor switch (10) is connected directly to the second drivable bidirectional power semiconductor switch (6) and directly to the junction point between the third drivable bidirectional power semiconductor switch (7) and the capacitor (11),
wherein for n > 1 each of the n second switching groups (4.1, ...4.n) is interlinked with the respectively adjacent second switching group (4.1, ...4.n),
wherein the first switching group (1) is connected to the first second switching group (4.1),
wherein a third switching group (12) and a fourth switching group (13) are provided, each having a first drivable bidirectional power semiconductor switch (14, 16), a second drivable bidirectional power semiconductor switch (15, 17) and a capacitor (18, 19) connected to the first and second drivable bidirectional power semiconductor switches (14, 15, 16, 17), wherein the first and second drivable bidirectional power semiconductor switches (14, 15, 16, 17) are connected to one another,
wherein p fifth switching groups (20.1, ...20.p) are provided, each having a first and a second drivable bidirectional power semiconductor switch (21, 22),
wherein p ≥ 1),
wherein for p > 1 each of the p fifth switching groups (20.1, 20.p) is interlinked with the respectively adjacent fifth switching group (20.1,...20.p),
wherein the first fifth switching group (20.1) is connected to the n-th second switching group (4.n),
wherein the third switching group (12) is connected to the p-th fifth switching group (20.p),
wherein the fourth switching group (13) is connected to the p-th fifth switching group (20.p), and
wherein the third switching group (12) is connected to the fourth switching group (13).

3. Converter circuit according to Claim 1, wherein the first drivable bidirectional power semiconductor switch (2) of the first switching group (1) is connected to the junction point between the first drivable bidirectional power semiconductor switch (5) and the capacitor (11) of the first second switching group (4.1), and the second power semiconductor switch (3) of the first switching group (1) is connected to the junction point between the third drivable bidirectional power semiconductor switch (7) and the capacitor (11) of the first second switching group (4.1),
wherein the junction point between the first drivable bidirectional power semiconductor switch (14) and the second drivable bidirectional power semiconductor switch (15) of the third switching group (12) is connected to the junction point between the second drivable bidirectional power semiconductor switch (6) and the sixth drivable bidirectional power semiconductor switch (10) of the n-th second switching group (4.n),
wherein the junction point between the first drivable bidirectional power semiconductor switch (16) and the second drivable bidirectional power semiconductor switch (17) of the fourth switching group (13) is connected to the junction point between the fourth drivable bidirectional power semiconductor switch (8) and the fifth drivable bidirectional power semiconductor switch (9) of the n-th second switching group (4.n), and
wherein the capacitor (18) of the third switching group (12) is connected to the capacitor (19) of the fourth switching group (13).

4. Converter circuit according to Claim 1, wherein the first drivable bidirectional power semiconductor switch (2) of the first switching group (1) is connected to the junction point between the first drivable bidirectional power semiconductor switch (5) and the capacitor (11) of the first second switching group (4.1), and the second drivable bidirectional power semiconductor switch (3) of the first switching group (1) is connected to the junction point between the third drivable bidirectional power semiconductor switch (7) and the capacitor (11) of the first second switching group (4.1),
wherein the connection of the fifth drivable bidirectional power semiconductor switch (9) to the fourth drivable bidirectional power semiconductor switch (8) in the case of each second switching group (4.1,...4.n) is at the junction point between the fourth drivable bidirectional power semiconductor switch (8) and the third drivable bidirectional power semiconductor switch (7), and the connection of the sixth drivable bidirectional power semiconductor switch (10) to the second drivable bidirectional power semiconductor switch (6) in the case of each second switching group (4.1,...4.n) is at the junction point between the second drivable bidirectional power semiconductor switch (6) and the first drivable bidirectional power semiconductor switch (5),
wherein the junction point between the first drivable bidirectional power semiconductor switch (14) and the second drivable bidirectional power semiconductor switch (15) of the third switching group (12) is connected to the second drivable bidirectional power semiconductor switch (6) of the n-th second switching group (4.n),
wherein the junction point between the first drivable bidirectional power semiconductor switch (16) and the second drivable bidirectional power semiconductor switch (17) of the fourth switching group (13) is connected to the fourth drivable bidirectional power semiconductor switch (8) of the n-th second switching group (4.n), and
wherein the capacitor (18) of the third switching group (12) is connected to the capacitor (19) of the fourth switching group (13).

5. Converter circuit according to Claim 2, wherein the first drivable bidirectional power semiconductor switch (2) of the first switching group (1) is connected to the junction point between the first drivable bidirectional power semiconductor switch (5) and the capacitor (11) of the first second switching group (4.1), and the second drivable bidirectional power semiconductor switch (3) of the first switching group (1) is connected to the junction point between the third drivable bidirectional power semiconductor switch (7) and the capacitor (11) of the first second switching group (4.1),
wherein the first drivable bidirectional power semiconductor switch (21) of the first fifth switching group (20.1) is connected to the junction point between the second drivable bidirectional power semiconductor switch (6) and the sixth drivable bidirectional power semiconductor switch (10) of the n-th second switching group (4.n),
wherein the second drivable bidirectional power semiconductor switch (22) of the first fifth switching group (20.1) is connected to the junction point between the fourth drivable bidirectional power semiconductor switch (8) and the fifth drivable bidirectional power semiconductor switch (9) of the n-th second switching group (4.n),
wherein the junction between the first drivable bidirectional power semiconductor switch (14) and the second drivable bidirectional power semiconductor switch (15) of the third switching group (12) is connected to the first drivable bidirectional power semiconductor switch (21) of the p-th fifth switching group (20.p),
wherein the junction point between the first drivable bidirectional power semiconductor switch (16) and the second drivable bidirectional power semiconductor switch (17) of the fourth switching group (13) is connected to the second drivable bidirectional power semiconductor switch (22) of the p-th fifth switching group (20.p), and
wherein the capacitor (18) of the third switching group (12) is connected to the capacitor (19) of the fourth switching group (13).

6. Converter circuit according to Claim 2, wherein the first drivable bidirectional power semiconductor switch (2) of the first switching group (1) is connected to the junction point between the first drivable bidirectional power semiconductor switch (5) and the capacitor (11) of the first second switching group (4.1), and the second drivable bidirectional power semiconductor switch (3) of the first switching group (1) is connected to the junction point between the third drivable bidirectional power semiconductor switch (7) and the capacitor (11) of the first second switching group (4.1),
wherein the connection of the fifth drivable bidirectional power semiconductor switch (9) to the fourth drivable bidirectional power semiconductor switch (8) in the case of each second switching group (4.1,...4.n) is at the junction point between the fourth drivable bidirectional power semiconductor switch (8) and the third drivable bidirectional power semiconductor switch (7), and the connection of the sixth drivable bidirectional power semiconductor switch (10) to the second drivable bidirectional power semiconductor switch (6) in the case of each second switching group (4.1,...4.n) is at the junction point between the second drivable bidirectional power semiconductor switch (6) and the first drivable bidirectional power semiconductor switch (5),
wherein the first drivable bidirectional power semiconductor switch (21) of the first fifth switching group (20.1) is connected to the second drivable bidirectional power semiconductor switch (6) of the n-th second switching group (4.n),
wherein the second drivable bidirectional power semiconductor switch (22) of the first fifth switching group (20.1) is connected to the fourth drivable bidirectional power semiconductor switch (8) of the n-th second switching group (4.n),
wherein the junction point between the first drivable bidirectional power semiconductor switch (14) and the second drivable bidirectional power semiconductor switch (15) of the third switching group (12) is connected to the first drivable bidirectional power semiconductor switch (21) of the p-th fifth switching group (20.p),
wherein the junction point between the first drivable bidirectional power semiconductor switch (16) and the second drivable bidirectional power semiconductor switch (17) of the fourth switching group (13) is connected to the second drivable bidirectional power semiconductor switch (22) of the p-th fifth switching group (20.p), and
wherein the capacitor (18) of the third switching group (12) is connected to the capacitor (19) of the fourth switching group (13).

7. Converter circuit according to Claim 5, wherein each fifth switching group (20.1,...20.p) has a capacitor (23) connected to the first and second drivable bidirectional power semiconductor switches (21, 22) of the associated fifth switching group (20.1, ...20.p),
wherein the capacitor (23) of the first fifth switching group (20.1) is connected to the junction point between the first drivable bidirectional power semiconductor switch (21) of the first fifth switching group (20.1) and the junction point between the second drivable bidirectional power semiconductor switch (6) and the sixth drivable bidirectional power semiconductor switch (10) of the n-th second switching group (4.n), and
wherein the capacitor (23) of the first fifth switching group (20.1) is connected to the junction point between the second drivable bidirectional power semiconductor switch (22) of the first fifth switching group (20.1) and the junction point between the fourth drivable bidirectional power semiconductor switch (8) and the fifth drivable bidirectional power semiconductor switch (9) of the n-th second switching group (4.n).

8. Converter circuit according to Claim 6, wherein each fifth switching group (20.1,...20.p) has a capacitor (23) connected to the first and second drivable bidirectional power semiconductor switches (21, 22) of the associated fifth switching group (20.1,...20.p),
wherein the capacitor (23) of the first fifth switching group (20.1) is connected to the junction point between the first drivable bidirectional power semiconductor switch (21) of the first fifth switching group (20.1) and the second drivable bidirectional power semiconductor switch (6) of the n-th second switching group (4.n), and
wherein the capacitor (23) of the first fifth switching group (20.1) is connected to the junction point between the second drivable bidirectional power semiconductor switch (22) of the first fifth switching group (20.1) and the fourth drivable bidirectional power semiconductor switch (8) of the n-th second switching group (4.n).

9. Converter circuit according to Claim 6, wherein the first fifth switching group (20.1) has a capacitor (23) connected to the first and second drivable bidirectional power semiconductor switches (21, 22) of the first fifth switching group (20.1),
wherein the capacitor (23) of the first fifth switching group (20.1) is connected to the junction point between the first drivable bidirectional power semiconductor switch (21) of the first fifth switching group (20.1) and the second drivable bidirectional power semiconductor switch (6) of the n-th second switching group (4.n), and
wherein the capacitor (23) of the first fifth switching group (20.1) is connected to the junction point between the second drivable bidirectional power semiconductor switch (22) of the first fifth switching group (20.1) and the fourth drivable bidirectional power semiconductor switch (8) of the n-th second switching group (4.n).

10. Converter circuit according to Claim 6, wherein the first fifth switching group (20.1) and at least one further fifth switching group (20.2,...,20.p) each have a capacitor (23) connected to the first and second drivable bidirectional power semiconductor switches connected to the first and second drivable bidirectional power semiconductor switches (21" 22) of the associated fifth switching group (20.1, 20.2...,20.p),
wherein the capacitor (23) of the first fifth switching group (20.1) is connected to the junction point between the first drivable bidirectional power semiconductor switch (21) of the first fifth switching group (20.1) and the second drivable bidirectional power semiconductor switch (6) of the n-th second switching group (4.n), and
wherein the capacitor (23) of the first fifth switching group (20.1) is connected to the junction point between the second drivable bidirectional power semiconductor switch (22) of the first fifth switching group (20.1) and the fourth drivable bidirectional power semiconductor switch (8) of the n-th second switching group (4.n).

11. Converter circuit according to any of Claims 1 to 10, wherein the first, second, third, fourth, fifth and sixth drivable bidirectional power semiconductor switches (5, 6, 7, 8, 9, 10) of each second switching group (4.1,...4.n) each have at least two drivable bidirectional switching elements, wherein the drivable bidirectional switching elements are connected in series.

12. Converter circuit according to any of Claims 1 to 11, wherein the first and second drivable bidirectional power semiconductor switches (21, 22) of each fifth switching group (20.1,...20.p) each have at least two drivable bidirectional switching elements, wherein the drivable bidirectional switching elements are connected in series.

13. Converter circuit according to any of Claims 1 to 12, wherein the first and second drivable bidirectional power semiconductor switches (14, 15) of the third switching group (12) and the first and second drivable bidirectional power semiconductor switches (16, 17) of the fourth switching group (13) each have at least two drivable bidirectional switching elements, wherein the drivable bidirectional switching elements are connected in series.

## Revendications

1. Circuit convertisseur destiné à la commutation de plusieurs niveaux de tension de commutation, présentant :
pour chaque phase (R, S, T) un premier groupe de commutation (1), le premier groupe de commutation (1) étant formé par un premier commutateur semi-conducteur de puissance (2) bidirectionnel asservi et un deuxième commutateur semi-conducteur de puissance (3) bidirectionnel asservi, le premier et le deuxième commutateur semi-conducteur de puissance (2, 3) bidirectionnels asservis du premier groupe de commutation (1) étant reliés l'un à l'autre,
n deuxièmes groupes de commutation (4.1, ..., 4.n) étant prévus et présentant chacun un premier, un deuxième, un troisième, un quatrième, un cinquième et un sixième commutateur semi-conducteur de puissance (5, 6, 7, 8, 9, 10) bidirectionnels asservis et un condensateur (11), n ≥ 1, et le premier commutateur semi-conducteur de puissance (5) bidirectionnel asservi étant raccordé en anti-série au deuxième commutateur semi-conducteur de puissance (6) bidirectionnel asservi, le troisième commutateur semi-conducteur de puissance (7) bidirectionnel asservi étant raccordé en anti-série au quatrième commutateur semi-conducteur de puissance (8) bidirectionnel asservi, le premier commutateur semi-conducteur de puissance (5) bidirectionnel asservi étant relié au condensateur (11), le troisième commutateur semi-conducteur de puissance (7) bidirectionnel asservi étant relié au condensateur (11), le cinquième commutateur semi-conducteur de puissance (9) bidirectionnel asservi étant relié directement au quatrième commutateur semi-conducteur de puissance (8) bidirectionnel asservi et directement au point de raccordement entre le premier commutateur semi-conducteur de puissance (5) bidirectionnel asservi et le condensateur (11) et le sixième commutateur semi-conducteur de puissance (10) bidirectionnel asservi étant relié directement au deuxième commutateur semi-conducteur de puissance (6) bidirectionnel asservi et directement au point de raccordement entre le troisième commutateur semi-conducteur de puissance (7) bidirectionnel asservi et le condensateur (11),
pour n > 1, chacun des n deuxièmes groupes de commutation (4.1, ..., 4.n) formant une chaîne avec le deuxième groupe de commutation (4.1, ..., 4.n) voisin respectif,
le premier groupe de commutation (1) étant relié au premier deuxième groupe de commutation (4.1),
un troisième groupe de commutation (12) et un quatrième groupe de commutation (13) étant prévus et présentant chacun un premier commutateur semi-conducteur de puissance (14, 16) bidirectionnel asservi, un deuxième commutateur semi-conducteur de puissance (15, 17) bidirectionnel asservi et un condensateur (18, 19) relié au premier et au deuxième commutateur semi-conducteur de puissance (14, 15, 16, 17) bidirectionnels asservis, le premier et le deuxième commutateur semi-conducteur de puissance (14, 15, 16, 17) bidirectionnels asservis étant reliés l'un à l'autre,
le troisième groupe de commutation (12) étant relié au nième deuxième groupe de commutation (4.n),
le quatrième groupe de commutation (13) étant relié au nième deuxième groupe de commutation (4.n) et
le troisième groupe de commutation (12) étant relié au quatrième groupe de commutation (13).

2. Circuit convertisseur destiné à la commutation de plusieurs niveaux de tension de commutation, présentant :
pour chaque phase (R, S, T) un premier groupe de commutation (1), le premier groupe de commutation (1) étant formé par un premier commutateur semi-conducteur de puissance (2) bidirectionnel asservi et un deuxième commutateur semi-conducteur de puissance (3) bidirectionnel asservi, le premier et le deuxième commutateur semi-conducteur de puissance (2, 3) bidirectionnels asservis du premier groupe de commutation (1) étant reliés l'un à l'autre,
n deuxièmes groupes de commutation (4.1, ..., 4.n) étant prévus et présentant chacun un premier, un deuxième, un troisième, un quatrième, un cinquième et un sixième commutateur semi-conducteur de puissance (5, 6, 7, 8, 9, 10) bidirectionnels asservis et un condensateur (11), n > 1 et le premier commutateur semi-conducteur de puissance (5) bidirectionnel asservi étant raccordé en anti-série au deuxième commutateur semi-conducteur de puissance (6) bidirectionnel asservi, le troisième commutateur semi-conducteur de puissance (7) bidirectionnel asservi étant raccordé en anti-série au quatrième commutateur semi-conducteur de puissance (8) bidirectionnel asservi, le premier commutateur semi-conducteur de puissance (5) bidirectionnel asservi étant relié au condensateur (11), le troisième commutateur semi-conducteur de puissance (7) bidirectionnel asservi étant relié au condensateur (11), le cinquième commutateur semi-conducteur de puissance (9) bidirectionnel asservi étant relié directement au quatrième commutateur semi-conducteur de puissance (8) bidirectionnel asservi et directement au point de raccordement entre le premier commutateur semi-conducteur de puissance (5) bidirectionnel asservi et le condensateur (11) et le sixième commutateur semi-conducteur de puissance (10) bidirectionnel asservi étant relié directement au deuxième commutateur semi-conducteur de puissance (6) bidirectionnel asservi et directement au point de raccordement entre le troisième commutateur semi-conducteur de puissance (7) bidirectionnel asservi et le condensateur (11),
pour n > 1, chacun des n deuxièmes groupes de commutation (4.1, ..., 4.n) formant une chaîne avec le deuxième groupe de commutation (4.1, ..., 4.n) voisin respectif,
le premier groupe de commutation (1) étant relié au premier deuxième groupe de commutation (4.1),
un troisième groupe de commutation (12) et un quatrième groupe de commutation (13) étant prévus et présentant chacun un premier commutateur semi-conducteur de puissance (14, 16) bidirectionnel asservi, un deuxième commutateur semi-conducteur de puissance (15, 17) bidirectionnel asservi et un condensateur (18, 19) relié au premier et au deuxième commutateur semi-conducteur de puissance (14, 15, 16, 17) bidirectionnels asservis, le premier et le deuxième commutateur semi-conducteur de puissance (14, 15, 16, 17) bidirectionnels asservis étant reliés l'un à l'autre,
p cinquièmes groupes de commutation (20.1, ..., 20.p) étant prévus et présentant tous un premier et un deuxième commutateur semi-conducteur de puissance (21, 22) bidirectionnel asservi, p ≥ 1,
pour p > 1, chacun des p cinquièmes groupes de commutation (20.1, ..., 20.p) formant une chaîne avec le cinquième groupe de commutation (20.1, ..., 20.p) voisin respectif,
le premier cinquième groupe de commutation (20.1) étant relié au nième deuxième groupe de commutation (4.n),
le troisième groupe de commutation (12) étant relié au p-ième cinquième groupe de commutation (20.p),
le quatrième groupe de commutation (13) étant relié au p-ième cinquième groupe de commutation (20.p) et
le troisième groupe de commutation (12) étant relié au quatrième groupe de commutation (13).

3. Circuit convertisseur selon la revendication 1, dans lequel le premier commutateur semi-conducteur de puissance (2) bidirectionnel asservi du premier groupe de commutation (1) est relié au point de raccordement entre le premier commutateur semi-conducteur de puissance (5) bidirectionnel asservi et le condensateur (11) du premier deuxième groupe de commutation (4.1) et le deuxième commutateur semi-conducteur de puissance (3) du premier groupe de commutation (1) étant relié au point de raccordement entre le troisième commutateur semi-conducteur de puissance (7) bidirectionnel asservi et le condensateur (11) du premier deuxième groupe de commutation (4.1),
le point de raccordement entre le premier commutateur semi-conducteur de puissance (14) bidirectionnel asservi et le deuxième commutateur semi-conducteur de puissance (15) bidirectionnel asservi du troisième groupe de commutation (12) étant relié au point de raccordement entre le deuxième commutateur semi-conducteur de puissance (6) bidirectionnel asservi et le sixième commutateur semi-conducteur de puissance (10) bidirectionnel asservi du nième deuxième groupe de commutation (4.n),
le point de raccordement entre le premier commutateur semi-conducteur de puissance (16) bidirectionnel asservi et le deuxième commutateur semi-conducteur de puissance (17) bidirectionnel asservi du quatrième groupe de commutation (13) étant relié au point de raccordement entre le quatrième commutateur semi-conducteur de puissance (8) bidirectionnel asservi et le cinquième commutateur semi-conducteur de puissance (9) bidirectionnel asservi du nième deuxième groupe de commutation (4.n) et
le condensateur (18) du troisième groupe de commutation (12) étant relié au condensateur (19) du quatrième groupe de commutation (13).

4. Circuit convertisseur selon la revendication 1, dans lequel le premier commutateur semi-conducteur de puissance (2) bidirectionnel asservi du premier groupe de commutation (1) est relié au point de raccordement entre le premier commutateur semi-conducteur de puissance (5) bidirectionnel asservi et le condensateur (11) du premier deuxième groupe de commutation (4.1) et le deuxième commutateur semi-conducteur de puissance (3) bidirectionnel asservi du premier groupe de commutation (1) est relié au point de raccordement entre le troisième commutateur semi-conducteur de puissance (7) bidirectionnel asservi et le condensateur (11) du premier deuxième groupe de commutation (4.1),
le raccordement entre le cinquième commutateur semi-conducteur de puissance (9) bidirectionnel asservi et le quatrième commutateur semi-conducteur de puissance (8) bidirectionnel asservi de chaque deuxième groupe de commutation (4.1, ..., 4.n) étant relié au point de raccordement entre le quatrième commutateur semi-conducteur de puissance (8) bidirectionnel asservi et le troisième commutateur semi-conducteur de puissance (7) bidirectionnel asservi et le raccordement du sixième commutateur semi-conducteur de puissance (10) bidirectionnel asservi et le deuxième commutateur semi-conducteur de puissance (6) bidirectionnel asservi de chaque deuxième groupe de commutation (4.1, ..., 4.n) étant relié au point de raccordement entre le deuxième commutateur semi-conducteur de puissance (6) bidirectionnel asservi et le premier commutateur semi-conducteur de puissance (5) bidirectionnel asservi,
le point de raccordement entre le premier commutateur semi-conducteur de puissance (14) bidirectionnel asservi et le deuxième commutateur semi-conducteur de puissance (15) bidirectionnel asservi du troisième groupe de commutation (12) étant relié au deuxième commutateur semi-conducteur de puissance (6) bidirectionnel asservi du nième deuxième groupe de commutation (4.n),
le point de raccordement entre le premier commutateur semi-conducteur de puissance (16) bidirectionnel asservi et le deuxième commutateur semi-conducteur de puissance (17) bidirectionnel asservi du quatrième groupe de commutation (13) étant relié au quatrième commutateur semi-conducteur de puissance (8) bidirectionnel asservi du nième deuxième groupe de commutation (4.n) et
le condensateur (18) du troisième groupe de commutation (12) étant relié au condensateur (19) du quatrième groupe de commutation (13).

5. Circuit convertisseur selon la revendication 2, dans lequel le premier commutateur semi-conducteur de puissance (2) bidirectionnel asservi du premier groupe de commutation (1) est relié au point de raccordement entre le premier commutateur semi-conducteur de puissance (5) bidirectionnel asservi et le condensateur (11) du deuxième groupe de commutation (4.1) et le deuxième commutateur semi-conducteur de puissance (3) bidirectionnel asservi du premier groupe de commutation (1) est relié au point de raccordement entre le troisième commutateur semi-conducteur de puissance (7) bidirectionnel asservi et le condensateur (11) du premier deuxième groupe de commutation (4.1),
le premier commutateur semi-conducteur de puissance (21) bidirectionnel asservi du premier cinquième groupe de commutation (20.1) étant relié au point de raccordement entre le deuxième commutateur semi-conducteur de puissance (6) bidirectionnel asservi et le sixième commutateur semi-conducteur de puissance (10) bidirectionnel asservi du nième deuxième groupe de commutation (4.n),
le deuxième commutateur semi-conducteur de puissance (22) bidirectionnel asservi du premier cinquième groupe de commutation (20.1) étant relié au point de raccordement entre le quatrième commutateur semi-conducteur de puissance (8) bidirectionnel asservi et le cinquième commutateur semi-conducteur de puissance (9) bidirectionnel asservi du nième deuxième groupe de commutation (4.n),
le point de raccordement entre le premier commutateur semi-conducteur de puissance (14) bidirectionnel asservi et le deuxième commutateur semi-conducteur de puissance (15) bidirectionnel asservi du troisième groupe de commutation (12) étant relié au premier commutateur semi-conducteur de puissance (21) bidirectionnel asservi du p-ième cinquième groupe de commutation (20.p),
le point de raccordement entre le premier commutateur semi-conducteur de puissance (16) bidirectionnel asservi et le deuxième commutateur semi-conducteur de puissance (17) bidirectionnel asservi du quatrième groupe de commutation (13) étant relié au deuxième commutateur semi-conducteur de puissance (22) bidirectionnel asservi du p-ième cinquième groupe de commutation (20.p) et
le condensateur (18) du troisième groupe de commutation (12) étant relié au condensateur (19) du quatrième groupe de commutation (13).

6. Circuit convertisseur selon la revendication 2, dans lequel le premier commutateur semi-conducteur de puissance (2) bidirectionnel asservi du premier groupe de commutation (1) est raccordé au point de raccordement du premier commutateur semi-conducteur de puissance (5) bidirectionnel asservi et le condensateur (11) du premier deuxième groupe de commutation (4.1) et le deuxième commutateur semi-conducteur de puissance (3) bidirectionnel asservi du premier groupe de commutation (1) est relié au point de raccordement entre le troisième commutateur semi-conducteur de puissance (7) bidirectionnel asservi et le condensateur (11) du premier deuxième groupe de commutation (4.1),
le raccordement entre le cinquième commutateur semi-conducteur de puissance (9) bidirectionnel asservi et le quatrième commutateur semi-conducteur de puissance (8) bidirectionnel asservi de chaque deuxième groupe de commutation (4.1, ..., 4.n) étant relié au point de raccordement du quatrième commutateur semi-conducteur de puissance (8) bidirectionnel asservi et du troisième commutateur semi-conducteur de puissance (7) bidirectionnel asservi et le raccordement entre le sixième commutateur semi-conducteur de puissance (10) bidirectionnel asservi et le deuxième commutateur semi-conducteur de puissance (6) bidirectionnel asservi de chaque deuxième groupe de commutation (4.1, ..., 4.n) étant relié au point de raccordement entre le deuxième commutateur semi-conducteur de puissance (6) bidirectionnel asservi et le premier commutateur semi-conducteur de puissance (5) bidirectionnel asservi,
le premier commutateur semi-conducteur de puissance (21) bidirectionnel asservi du premier cinquième groupe de commutation (20.1) étant raccordé au deuxième commutateur semi-conducteur de puissance (6) bidirectionnel asservi du nième deuxième groupe de commutation (4.n),
le deuxième commutateur semi-conducteur de puissance (22) bidirectionnel asservi du premier cinquième groupe de commutation (20.1) étant relié au quatrième commutateur semi-conducteur de puissance (8) bidirectionnel asservi du nième deuxième groupe de commutation (4.n),
le point de raccordement entre le premier commutateur semi-conducteur de puissance (14) bidirectionnel asservi et le deuxième commutateur semi-conducteur de puissance (15) bidirectionnel asservi du troisième groupe de commutation (12) étant relié au premier commutateur semi-conducteur de puissance (21) bidirectionnel asservi du p-ième cinquième groupe de commutation (20.p),
le point de raccordement entre le premier commutateur semi-conducteur de puissance (16) bidirectionnel asservi et le deuxième commutateur semi-conducteur de puissance (17) bidirectionnel asservi du quatrième groupe de commutation (13) étant relié au deuxième commutateur semi-conducteur de puissance (22) bidirectionnel asservi du p-ième cinquième groupe de commutation (20.p) et
le condensateur (18) du troisième groupe de commutation (12) étant relié au condensateur (19) du quatrième groupe de commutation (13).

7. Circuit convertisseur selon la revendication 5, dans lequel chaque cinquième groupe de commutation (20.1, ..., 20.p) présente un condensateur (23) relié au premier et au deuxième commutateur semi-conducteur de puissance (21, 22) bidirectionnels asservis du cinquième groupe de commutation (20.1, ..., 20.p) associé,
le condensateur (23) du premier cinquième groupe de commutation (20.1) étant relié au point de raccordement entre le premier commutateur semi-conducteur de puissance (21) bidirectionnel asservi du premier cinquième groupe de commutation (20.1) et le point de raccordement entre le deuxième commutateur semi-conducteur de puissance (6) bidirectionnel asservi et le sixième commutateur semi-conducteur de puissance (10) bidirectionnel asservi du nième deuxième groupe de commutation (4.n) et
le condensateur (23) du premier cinquième groupe de commutation (20.1) étant relié au point de raccordement entre le deuxième commutateur semi-conducteur de puissance (22) bidirectionnel asservi du premier cinquième groupe de commutation (20.1) et le point de raccordement entre le quatrième commutateur semi-conducteur de puissance (8) bidirectionnel asservi et le cinquième commutateur semi-conducteur de puissance (9) bidirectionnel asservi du nième deuxième groupe de commutation (4.n).

8. Circuit convertisseur selon la revendication 6, dans lequel chaque cinquième groupe de commutation (20.1, ..., 20.p) présente un condensateur (23) relié au premier et au deuxième commutateur semi-conducteur de puissance (21, 22) bidirectionnels asservis du cinquième groupe de commutation (20.1, ..., 20.p) associé,
le condensateur (23) du premier cinquième groupe de commutation (20.1) étant relié au point de raccordement du premier commutateur semi-conducteur de puissance (21) bidirectionnel asservi du premier cinquième groupe de commutation (20.1) et le deuxième commutateur semi-conducteur de puissance (6) bidirectionnel asservi du nième deuxième groupe de commutation (4.n) et
le condensateur (23) du premier cinquième groupe de commutation (20.1) étant relié au point de raccordement entre le deuxième commutateur semi-conducteur de puissance (22) bidirectionnel asservi du premier cinquième groupe de commutation (20.1) et le quatrième commutateur semi-conducteur de puissance (8) bidirectionnel asservi du nième deuxième groupe de commutation (4.n).

9. Circuit convertisseur selon la revendication 6, dans lequel le premier cinquième groupe de commutation (20.1) présente un condensateur (23) relié au premier et au deuxième commutateur semi-conducteur de puissance (21, 22) bidirectionnel asservi du premier cinquième groupe de commutation (20.1),
le condensateur (23) du premier cinquième groupe de commutation (20.1) étant relié au point de raccordement entre le premier commutateur semi-conducteur de puissance (21) bidirectionnel asservi du premier cinquième groupe de commutation (20.1) et le deuxième commutateur semi-conducteur de puissance (6) bidirectionnel asservi du nième deuxième groupe de commutation (4.n) et
le condensateur (23) du premier cinquième groupe de commutation (20.1) étant relié au point de raccordement entre le deuxième commutateur semi-conducteur de puissance (22) bidirectionnel asservi du premier cinquième groupe de commutation (20.1) et le quatrième commutateur semi-conducteur de puissance (8) bidirectionnel asservi du nième deuxième groupe de commutation (4.n).

10. Circuit convertisseur selon la revendication 6, dans lequel le premier cinquième groupe de commutation (20.1) et au moins un autre cinquième groupe de commutation (20.2, ..., 20.p) présentent tous deux un condensateur (23) raccordé au premier et au deuxième commutateur semi-conducteur de puissance (21, 22) bidirectionnels asservis du cinquième groupe de commutation (20.1, 20.2, ..., 20.p) associés,
le condensateur (23) du premier cinquième groupe de commutation (20.1) étant relié au point de raccordement entre le premier commutateur semi-conducteur de puissance (21) bidirectionnel asservi du premier cinquième groupe de commutation (20.1) et le deuxième commutateur semi-conducteur de puissance (6) bidirectionnel asservi du nième deuxième groupe de commutation (4.n) et
le condensateur (23) du premier cinquième groupe de commutation (20.1) étant relié au point de raccordement entre le deuxième commutateur semi-conducteur de puissance (22) bidirectionnel asservi du premier cinquième groupe de commutation (20.1) et le quatrième commutateur semi-conducteur de puissance (8) bidirectionnel asservi du nième deuxième groupe de commutation (4.n).

11. Circuit convertisseur selon l'une des revendications 1 à 10, dans lequel le premier, le deuxième, le troisième, le quatrième, le cinquième et le sixième commutateur semi-conducteur de puissance (5, 6, 7, 8, 9, 10) bidirectionnels asservis de chaque deuxième groupe de commutation (4.1, ..., 4.n) présentent tous au moins deux éléments de commutation bidirectionnels asservis, les éléments de commutation bidirectionnels asservis étant raccordés en série.

12. Circuit convertisseur selon l'une des revendications 1 à 11, dans lequel le premier et le deuxième commutateur semi-conducteur de puissance (21, 22) bidirectionnels asservis de chaque cinquième groupe de commutation (20.1, ..., 20.p) présentent tous au moins deux éléments de commutation bidirectionnels asservis, les éléments de commutation bidirectionnels asservis étant raccordés en série.

13. Circuit convertisseur selon l'une des revendications 1 à 12, dans lequel le premier et le deuxième commutateur semi-conducteur de puissance (14, 15) bidirectionnels asservis du troisième groupe de commutation (12) et le premier et le deuxième commutateur semi-conducteur de puissance (16, 17) bidirectionnels asservis du quatrième groupe de commutation (13) présentent tous au moins deux éléments de commutation bidirectionnels asservis, les éléments de commutation bidirectionnels asservis étant raccordés en série.
